# EUROPÄISCHE PATENTSCHRIFT

(11) **EP 3 983 318 B1**
(45) Veröffentlichungstag und Bekanntmachung des Hinweises auf die Patenterteilung: **08.05.2024**
(21) Anmeldenummer: 20732533.3
(22) Anmeldetag: 09.06.2020
(51) Int. Cl.: B65G 15/08, B65G 39/071

(54) **TRAGROLLEN FÜR FÖRDERGURTANLAGEN**
CARRIER ROLLERS FOR CONVEYOR BELT SYSTEMS
ROULEAUX DE SUPPORT POUR INSTALLATIONS À BANDE TRANSPORTEUSE

(30) Priorität: 12.06.2019 DE 102019208488
(43) Veröffentlichungstag der Anmeldung: 20.04.2022
(73) Patentinhaber: FLSmidth A/S, 2500 Valby (DK)
(72) Erfinder: RAAZ, Viktor, 44869 Bochum (DE); SCHMITT, Martin, 58455 Witten (DE); HOFMANN, Bastian, 44879 Bochum (DE); MICHAELI, Gerhard, 66386 Sankt Ingbert (DE); EICHLER, Rüdiger, 66386 St. Ingbert (DE)
(74) Vertreter: Michalski Hüttermann & Partner Patentanwälte mbB
(86) Internationale Anmeldenummer: PCT/EP2020/065889
(87) Internationale Veröffentlichungsnummer: WO 2020/249531

(56) Entgegenhaltungen:
- EP-A1- 0 058 040
- GB-A- 785 680
- US-A- 2 665 592
- US-A- 5 042 646
- US-A- 6 029 800
- US-A1- 2016 176 645
- US-A1- 2016 200 473

## Beschreibung

Die Erfindung betrifft eine Tragrolle für einen gemuldeten Fördergurt oder einen gerollten Fördergurt, wobei die Tragrolle um eine Rotationsachse rotierbar ausgebildet ist und ein Walzenelement mit einem Rollstützbereich umfasst, welcher eingerichtet ist, den Fördergurt rollend abzustützen, wobei der Rollstützbereich bezüglich der Rotationsachse der Tragrolle rotationssymmetrisch ist und entlang seiner axialen Ausdehnung unterschiedliche Durchmesser mit einem Maximaldurchmesser des Rollstützbereichs und einem Minimaldurchmesser des Rollstützbereichs aufweist. Die Erfindung betrifft ferner eine Tragrollenstation mit mindestens einer derartigen Tragrolle, eine Gurtförderanlage mit mindestens einer derartigen Tragrollenstation sowie ein Verfahren zum Abstützen und Führen eines gemuldeten oder gerollten bewegten Fördergurtes, der quer zur Bewegungsrichtung eine Querkrümmung aufweist.

Zum Transport von Schüttgütern wie etwa von Abraum, Erzen, Brennstoffen, Baustoffen und dergleichen über eine vorgegebene Förderstrecke (Transportstrecke) werden als stationäre oder halbstationäre Stetigförderer häufig Gurtförderanlagen (Gurtförderer, Fördergurtanlagen, Bandförderanlagen, Gurtbandförderanlagen) eingesetzt. In einer Gurtförderanlage wird ein endloser Fördergurt (Traggurt, Förderband) durch mindestens eine Antriebsstation (Antriebstrommel) in eine umlaufende Bewegung versetzt. Dabei wird der Fördergurt als Obertrum von einer (anfangsseitigen) Umlenkstation zu einer weiteren (endseitigen) Umlenkstation geführt, an welcher der Fördergurt umgelenkt wird. Von der endseitigen Umlenkstation aus wird der umgelenkte Fördergurt als Untertrum zu der anfangsseitigen Umlenkstation zurückgeführt, dort erneut umgelenkt und wieder als Obertrum geführt. Als Trommeln für Umlenkstationen von Förderbändern sind aus US 2016/176645 A1 Friktionsrollen bekannt, die etwa spindelförmig-konvex ausgestaltet sind, um im Betrieb ein seitliches Verrutschen des Förderbandes auf der Friktionswalze zu verhindern, oder auch kegelstumpfförmig ausgestaltet sind, um den Kurvenlauf des Fördergurtes zu verbessern.

Aufgrund der höheren Aufnahmekapazität und besseren Materialführung gelangen für Schüttgüter seltener Fördergurte in Flachform (in einer Flachgurtförderanlage) zum Einsatz, sondern vor allem Fördergurte mit einem gemuldeten Obertrum (als Muldengurt in einer Muldengurtförderanlage, etwa mit V-förmiger Muldung bei zwei Tragrollen oder mit U-Form, etwa bei drei, vier fünf oder mehr Tragrollen) oder einem gerollten Obertrum (als Schlauchgurt / Rohrgurt, jeweils in einer Schlauchgurtförderanlage). Je nach Förderaufgabe wird ein in einem gemuldeten oder gerollten Obertrum geführter Fördergurt im Untertrum in Flachform, in gemuldeter Form oder in Einzelanwendungen auch in gerollter Form zurückgeführt.

Der endlos umlaufende Fördergurt muss auf der Förderstrecke im beladenen Obertrum wie auch im zurückgeführten Untertrum (dort im unbeladenen oder auch beladenen Zustand) gestützt und geführt werden, wobei eine Stützung besonders wichtig für einen beladenen Fördergurt ist. Als Tragelemente und Führungselemente werden zur Stützung und Führung Tragrollen in einer Traggerüstkonstruktion verwendet, einer Tragrollenstation. In einer Tragrollenstation ist zumindest eine Tragrolle rotierbar gelagert und abgestützt, üblicherweise mehrere Tragrollen - vor allem bei Tragrollenstationen für gemuldete oder gerollte Fördergurte; Tragrollenstationen für gemuldete oder gerollte Fördergurte mit taillierten Tragrollen sind beispielsweise aus EP 0 058 040 A1 bekannt. EP 0 058 040 A1 offenbart eine Tragrolle gemäß dem Oberbegriff des Anspruchs 1. Tragrollenstationen stellen also Stützungspunkte für den Fördergurt dar und sind typischerweise als starre Gerüststruktur (Tragrollenstuhl, Rollenstuhl, Rollenbock) ausgebildet, in der die Achsen der einzelnen Tragrollen starr angeordnet sind, oder aber als bewegliche Struktur (Tragrollengirlande), in der die Achsen der einzelnen Tragrollen relativ zueinander bewegbar angeordnet sind, indem diese etwa über Ketten miteinander verbunden sind. Tragrollenstationen können entlang der Förderstrecke individuell positionierbar sein, im Rahmen einer übergeordneten Gerüststruktur mit benachbarten Tragrollenstationen verbindbar oder aber als integraler Bestandteil des Traggerüsts der Gurtförderanlage ausgebildet sein. Der Fördergurt einer Gurtförderanlage weist typischerweise eine obere Deckplatte und eine untere Deckplatte auf, zwischen welchen ein tragendes Element (Karkasse) angeordnet ist, das als Einlage ausgeführt ist. Diese Karkasse besteht aus einer Faserschicht oder mehrerer Faserschichten, die in Gummi eingebettet sind. Die Faserschicht dient vor allem als Längsträger (Zugträger, Gurtzugträger)., Fasern sind dazu in Längsrichtung des Fördergurtes ausgerichtet angeordnet im Betrieb werden die in Förderrichtung (in Transportrichtung, das heißt Bewegungsrichtung des Fördergurtes und damit in dessen Längsrichtung) wirkenden Zugkräfte über diese Fasern übertragen oder abgeleitet. In der Regel sind die Längsträger textile Gewebe, Stahlseile, hochfeste Polymere oder entsprechende Kompositsysteme. Als Querarmierung sind häufig zusätzliche Festigkeitsträger vorgesehen, die quer zur Längsrichtung ausgerichtet angeordnet sind und den Fördergurt quer zur Förderrichtung verstärken. In der Regel sind diese zusätzlichen Festigkeitsträger Stahlseile oder Textilgewebe. Die obere Deckplatte und die untere Deckplatte des Fördergurtes sind Gummilagen, wobei die obere Deckplatte (Tragschicht, Tragseite) zur Aufnahme des Schüttguts dient und die untere Deckplatte (Laufschicht, Laufseite) im Kontakt mit den Umlenkwalzen, Antriebswalzen, Tragrollen und sonstigen Führungs- und Stützelementen steht. Infolge des direkten Kontakts der oberen Deckplatte mit dem - zum Teil scharfkantigen - Fördergut ist die obere Deckplatte in der Regel verschleißfest ausgebildet und weist eine größere Stärke auf als die untere Deckplatte. Die Stärke der tragrollenseitigen unteren Deckplatte liegt bei vielen Fördergurten im Bereich von 3 mm bis 5 mm.

Die Tragrollen stützen den Fördergurt über die Förderstrecke in einer Vielzahl an Stützungspunkten ab, wobei der Fördergurt im Bereich zwischen zwei benachbarten Stützungspunkten ungestützt verläuft. Damit kommt es in diesem Bereich in Längsrichtung des Fördergurtes zu einem Gurtdurchhang. Dadurch erfährt der Fördergurt an den Tragrollen in dem Punkt, in welchem seine Unterseite - also die Außenseite der unteren Deckplatte - in Kontakt mit der Außenseite der Tragrolle tritt (in der Kontaktzone), eine lokale Krümmung senkrecht zur Fördergurtoberfläche in Längsrichtung des Fördergurtes, deren Ausmaß vom Gurtdurchhang und damit auch vom Beladungszustand des Fördergurtes abhängig ist. Die Krümmung des Fördergurtes bezeichnet allgemein die lokale Abweichung von einem geraden Verlauf des Fördergurtes, wobei eine derartige Krümmung hier senkrecht zur Fördergurtoberfläche (der oberen Außenseite der oberen Deckplatte oder der unteren Außenseite der unteren Deckplatte) auftritt und senkrecht zu der Förderrichtung erfolgt und somit senkrecht zu den Zugkräften. Bei einer Längskrümmung (Längsträgerkrümmung) berührt der äußere Umfang des Krümmungskreises den Fördergurt in Förderrichtung, sodass diese Krümmung entsprechend auch auf die Längsträger übertragen wird, bei einer Querkrümmung berührt der äußere Umfang des Krümmungskreises den Fördergurt quer zur Förderrichtung.

Für den Transport des Förderguts mittels einer Gurtförderanlage wird eine bestimmte Energie benötigt, die neben der Transportenergie (welche zum eigentlichen Transport des Förderguts erforderlich ist) auch Anteile beinhaltet, die auf einen Laufwiderstand zwischen Fördergurt und Tragrollen zurückzuführen sind. Dieser Laufwiderstand beruht unter anderem auf Reibphänomenen zwischen Fördergurt und Tragrollen. Der Laufwiderstand führt nicht nur zu einem aus ökonomischen und ökologischen Gründen unerwünschten höheren Energieverbrauch, sondern resultiert darüber hinaus auch in einer stärkeren mechanischen Beanspruchung der unteren Deckplatte des Fördergurtes. Diese mechanische Beanspruchung hat während des Transports einen vermehrten Abrieb und erhöhten Verschleiß der unteren Deckplatte und überdies eine Lärmbeeinträchtigung (Quietschen) zur Folge.

Demzufolge ist es die Aufgabe der vorliegenden Erfindung, den Laufwiderstand beim Transport von Fördergut auf einer Gurtförderanlage zu verringern. Insbesondere ist es Aufgabe der vorliegenden Erfindung, eine Tragrolle für einen gemuldeten oder gerollten Fördergurt bereit zu stellen, welche einen verringerten Laufwiderstand bietet, eine Tragrollenhalterung für eine derartige Tragrolle, eine Gurtförderanlage mit einer solchen Tragrolle sowie ein Verfahren zum Abstützen und Führen eines gemuldeten oder gerollten bewegten Fördergurtes, der quer zur Bewegungsrichtung eine Querkrümmung aufweist.

Die vorliegende Aufgabe wird gelöst mit einer Tragrolle gemäß Anspruch 1 für einen gemuldeten oder gerollten Fördergurt, wobei die Tragrolle um eine Rotationsachse rotierbar ausgebildet ist und ein Walzenelement mit einem Rollstützbereich umfasst, welcher eingerichtet ist, den Fördergurt rollend abzustützen, wobei der Rollstützbereich bezüglich der Rotationsachse der Tragrolle rotationssymmetrisch ist und entlang seiner axialen Ausdehnung unterschiedliche Durchmesser mit einem Maximaldurchmesser des Rollstützbereichs und einem Minimaldurchmesser des Rollstützbereichs aufweist. Bei der Tragrolle beträgt der Minimaldurchmesser des Rollstützbereichs mindestens 95 % und höchstens 99,8 % des Maximaldurchmessers des Rollstützbereichs. Das Walzenelement umfasst einen ersten Walzenbereich und einen zweiten Walzenbereich, von denen der erste Walzenbereich an einem Ende des Walzenelements angeordnet ist und von denen der zweite Walzenbereich neben dem ersten Walzenbereich angeordnet ist. Der Rollstützbereich weist hier zumindest in einem Teil des ersten Walzenbereichs den Maximaldurchmesser aufweist, und der Rollstützbereich weist zumindest in einem Teil des zweiten Walzenbereichs den Minimaldurchmesser auf. Das Walzenelement weist ferner einen dritten Walzenbereich auf, welcher an einem weiteren Ende des Walzenelements angeordnet ist, wobei das weitere Ende dem Ende des Walzenelements mit dem ersten Walzenbereich gegenüber angeordnet ist, sodass der zweite Walzenbereich in axialer Richtung zwischen dem ersten Walzenbereich und dem dritten Walzenbereich angeordnet ist, wobei der Rollstützbereich zumindest in einem Teil des dritten Walzenbereichs den Maximaldurchmesser aufweist. Vorteilhafte Weiterbildungen ergeben sich aus den Unteransprüchen, der nachfolgenden Beschreibung sowie den Zeichnungen.

Grundsätzlich betrifft die vorliegende Erfindung die allgemein in der Einleitung beschriebenen Gurtförderanlagen sowie deren Einzelkomponenten. Dabei sind Tragrollen funktionale Elemente, die bei einer Drehbewegung um ihre Rotationsachse (Drehachse) einen rollenden Kontakt zwischen einem bewegten Fördergurt und einem stationären oder quasistationären Traggerüst ermöglichen. Der Fördergurt ist ein endloses Band, welches hinsichtlich des Aufbaus und Materials angepasst ist, um für das zu transportierende Gut (Fördergut) als Tragmittel dienen zu können, gleichzeitig dient er für eine Bewegung in Förderrichtung auch als Zugmittel. Wie bereits beschrieben, weist einen Fördergurt typischerweise eine untere Deckplatte und eine obere Deckplatte auf sowie einen als Einlage zwischen den beiden Deckplatten angeordneten Bereich. Dieser Bereich enthält die Längsträger und gegebenenfalls auch Querträger. Darüber hinaus kann ein Fördergurt natürlich auch weitere Elemente aufweisen, beispielsweise einen Kantenschutz; dieser ist in der Regel aus Gummi gefertigt. Grundsätzlich kann ein Fördergurt beliebig ausgebildet sein, entweder direkt in endloser Bauform gefertigt oder aber als Band, dessen Enden mittels einer Endlosverbindung miteinander verbunden worden (etwa als mechanische Verbindung oder als vulkanisierte Verbindung). Das Traggerüst ist dabei die gerüstartige Tragkonstruktion einer Gurtförderanlage, über welche die Gurtförderanlage auf dem Untergrund abgestützt ist. Typischerweise werden die Hauptelemente eines Traggerüsts aus Stahlbauprofilen gebildet.

Eine Tragrolle ist folglich um eine Rotationsachse rotierbar ausgebildet. Dazu weist die Tragrolle ein Walzenelement (Walzenkörper, Tragrollenmantel, Rolle) auf, welches drehbar an einer Tragachse als Rotationsachse gelagert ist. Die äußere Fläche (Mantelfläche) des Walzenelements bildet an dem in radialer Richtung äußeren Umfang des Walzenelements einen Rollstützbereich (Rollflächenbereich), dieser ist ein Teilbereich der Mantelfläche des Walzenelements oder gegebenenfalls auch die gesamte Mantelfläche des Walzenelements. Die Mantelfläche des Walzenelements bildet eine rotationssymmetrische dreidimensionale Anordnung einer zweidimensionalen Fläche, sodass der Rollstützbereich auch als Teilbereich dieser Fläche ebenfalls eine dreidimensional gebogene Anordnung einer zweidimensionalen (Teil-)Fläche darstellt, deren Durchmesser quer zur Rotationsachse liegt.

Dieser Teilbereich ist so am Walzenelement angeordnet, dass er in radialer Richtung die äußere Begrenzung des Walzenelements darstellt, sodass dieser Bereich beim Abrollen des Walzenelements an einer Oberfläche diese Oberfläche jeweils lokal berührt. Im Betrieb tritt daher auch der Rollstützbereich mit der unteren Deckplatte des Fördergurtes als Lauffläche in Kontakt, sodass der Fördergurt bei der Rollbewegung der Tragrolle rollend abgestützt wird. Dazu sind im Betrieb die Rotationsachsen der Tragrollen quer zur Förderrichtung des Fördergurtes angeordnet, die Tragrollen stehen daher zumindest im Wesentlichen senkrecht zur Förderrichtung, (also in einem Winkel von 90 ° (Grad) dazu oder allenfalls mit einer Abweichung von diesem Winkel, die eine weitgehend rollwiderstandsfreie Bewegung des Fördergurtes in Förderrichtung noch gewährleistet, beispielsweise mit maximal ±3 ° Abweichung von 90 °).

Um ein gleichmäßiges Rollverhalten zu gewährleisten sind Tragrollen rotationssymmetrisch bezüglich der Rotationsachse ausgebildet, welche innerhalb der Tragrolle durch die Tragrolle hindurch verläuft. Dabei ist vor allem der Rollstützbereich rotationssymmetrisch bezüglich der Rotationsachse der Tragrolle. Im Sinne dieser Anmeldung wird ein Körper als "rotationssymmetrisch" angesehen, wenn dieser zumindest im Wesentlichen Rotationssymmetrie (Drehsymmetrie) um eine Rotationsachse aufweist; dies schließt nicht aus, dass ein rotationssymmetrisch ausgebildeter Körper gegebenenfalls kleinere fertigungsbedingte oder anderweitig beabsichtigte oder unbeabsichtigte Unregelmäßigkeiten aufweisen kann, beispielsweise Bohrungen, die von einer idealen (perfekten) Rotationssymmetrie abweichen. Walzenelemente weisen in der Regel eine Zylinderform oder zylinderähnliche Formen auf. Als zylinderähnliche Form werden insbesondere auch Abweichungen von der Zylinderform angesehen, bei welcher die Zylinderform bereichsweise geändert wird, ohne dass dabei von einer Rotationssymmetrie abgewichen wird, beispielsweise eine einfache oder mehrfache, symmetrische oder asymmetrische Taillierung des Walzenelements (auch spindelförmig) oder aber eine Ausgestaltung als Kegelstumpf.

Walzenelemente sind in der Regel aus einem mechanisch belastbaren und damit stabilen Material gefertigt, typischerweise aus Stahl oder Edelstahl, aus Aluminium, aus polymeren Werkstoffen, keramischen Werkstoffen oder aus Kompositwerkstoffen. Häufig sind Walzenelemente als Rohrabschnitte ausgebildet, in deren Enden als Tragrollenböden Kappen (häufig Gusskappen) eingeschweißt oder eingepresst sind, welche - zumeist integrierte - Lagerhalterungen aufweisen. Typischerweise gelangt dabei dann eine Innenlagerung zum Einsatz, bei welcher Wälzlager in die Lagerhalterungen eingebracht werden, beispielsweise Rillenkugellager, die sich innerhalb der Tragrolle befinden und mit welchen eine innenliegende feststehende Achse (Tragachse) drehbar geführt wird, die mit dem Traggerüst verbunden ist, sodass sich die Tragrolle dann relativ zur festen Achse dreht. Häufig sind die Lager mit geeigneten Dichtmitteln abgedichtet, beispielsweise mit Labyrinthdichtungen. Zusätzlich zu den vorgenannten Elementen können Tragrollen weitere Elemente aufweisen, beispielsweise Pufferringe oder Pufferbeschichtungen aus elastisch-kompressiblen Materialien oder Stützringe.

Die Abmessungen der Tragrollen sind von der Breite des jeweils eingesetzten Fördergurtes und der zu erzielenden Geschwindigkeit abhängig. Je nach Anwendungszweck werden Tragrollendurchmesser typischerweise aus einem Bereich von 60 mm bis 220 mm ausgewählt, jedoch sind auch andere Durchmesser möglich.

Gängige Ausführungen genormter Tragrollen sind etwa in DIN 15207 und DIN 22112 Teil 1 bis 3 sowie in der Richtlinie VDI 2341 aufgeführt.

Der Laufwiderstand einer Tragrolle wird in erster Linie von der internen Reibung der Lager und des Dichtmittels (insbesondere aufgrund von Fertigungstoleranzen der einzelnen Komponenten sowie aufgrund vom Verschleiß der Tragrollen) sowie von der Viskosität des Schmiermittels für die Lager bestimmt. Darüber hinaus leistet eine Vielzahl an schwer quantifizierbaren Nebenfaktoren ebenfalls Beiträge zum Laufwiderstand.

Gemäß der vorliegenden Erfindung weist der Rollstützbereich entlang seiner axialen Ausdehnung unterschiedliche Durchmesser auf, der Rollstützbereich besitzt also keinen über seine gesamte Ausdehnung konstanten Durchmesser und ist folglich auch nicht exakt zylindrisch ausgebildet, sondern allenfalls zylinderähnlich. Der Begriff "axial" ist vorliegend als "entlang der Rotationsachse der Tragrolle ausgerichtet" (parallel zu Rotationsachse der Tragrolle ausgerichtet) aufzufassen, wobei die Rotationsachse der Tragrolle auch die Rotationsachse des Walzenelements bildet und gleichzeitig auch die Rotationsachse des Rollstützbereichs darstellt, welcher bezüglich der Rotationsachse der Tragrolle rotationssymmetrisch ist. Gleichermaßen ist der Begriff "radial" vorliegend als "senkrecht zu der Rotationsachse der Tragrolle ausgerichtet" zu verstehen.

Dabei weist der Rollstützbereich einen Maximaldurchmesser auf. Dies bedeutet, dass der Rollstützbereich an mindestens einer Position oder an mindestens einem Teilbereich einen Durchmesser aufweist, der von keinem anderen Durchmesser des Rollstützbereichs überschritten wird. Hierdurch ist allerdings nicht ausgeschlossen, dass der Rollstützbereich diesen Maximaldurchmesser an mehreren Positionen, über einen Teilbereich oder sogar über mehrere Teilbereiche aufweist. Ebenso weist der Rollstützbereich an mindestens einer Position oder über mindestens einen Teilbereich einen Minimaldurchmesser auf, der von keinem anderen Durchmesser des Rollstützbereichs unterschritten wird. Typischerweise erfolgt der Übergang von einer Position/Stelle mit Maximaldurchmesser zu einer Stelle mit Minimaldurchmesser in axialer Richtung bezüglich des Durchmessers kontinuierlich und somit ohne Stufen, jedoch sind auch Varianten mit einem stufenweisen Übergang oder mit mehreren stufenweisen Übergängen grundsätzlich möglich, etwa im Falle segmentierter Tragrollen.

Der Umstand, dass der Rollstützbereich einen Maximaldurchmesser aufweist, schließt nicht aus, dass das Walzenelement oder die gesamte Tragrolle in anderen Bereichen als dem Rollstützbereich einen Durchmesser aufweisen kann, welcher den Maximaldurchmesser des Rollstützbereichs überschreitet. Vielmehr kann sich ein derartiger größerer Durchmesser etwa in einem Teilbereich des Walzenelements befinden, welcher beim Abrollen des Walzenelements an einer Oberfläche des Fördergurtes die Oberfläche des Fördergurtes lokal nicht berührt und somit nicht dem Rollstützbereich zuzurechnen ist. Dies beinhaltet beispielsweise auch über den Rollstützbereich herausragende Erhebungen an den Endabschnitten der Tragrolle. Entsprechendes gilt auch für den Minimaldurchmesser, welcher von Teilen der Tragrolle unterschritten werden kann, die nicht zum Rollstützbereich gehören, also etwa tiefere Einbuchtungen in der Oberseite des Walzenelements, welche nicht mit der Außenseite des Fördergurtes in Kontakt treten; dies können beispielsweise die Lücken zwischen einzelnen Walzensegmenten oder auch Rillen zur Reibungsflächenverminderung sein.

Erfindungsgemäß beträgt der Minimaldurchmesser des Rollstützbereichs mindestens 95 % des Maximaldurchmessers des Rollstützbereichs und höchstens 99,8 % des Maximaldurchmessers des Rollstützbereichs.

Mit anderen Worten beinhaltet die vorliegende Erfindung also auch eine Tragrolle für einen Fördergurt, die ein Walzenelement mit einer Mantelfläche umfasst, wobei das Walzenelement in Bezug auf die Mantelfläche einen hinsichtlich der Mantelfläche größten Durchmesser des Walzenelements als Maximaldurchmesser sowie einen hinsichtlich der Mantelfläche kleinsten Durchmesser des Walzenelements als Minimaldurchmesser aufweist, wobei der Minimaldurchmesser des Walzenelements mindestens 95 % und höchstens 98,8 % des Maximaldurchmessers des Walzenelements beträgt. In Bezug auf die Mantelfläche des Walzenelements entspricht dabei der Durchmesser des Walzenelements dem Durchmesser des Rollstützbereichs, sodass also der (hinsichtlich der Mantelfläche) größte Durchmesser des Walzenelements den Maximaldurchmesser des Rollstützbereichs und der (hinsichtlich der Mantelfläche) kleinste Durchmesser des Walzenelements den Minimaldurchmesser des Rollstützbereichs darstellt.

Gemäß einem weiteren Aspekt ist die Tragrolle so ausgestaltet, dass der Minimaldurchmesser des Rollstützbereichs mindestens 98,0 % des Maximaldurchmessers des Rollstützbereichs beträgt. Gemäß einem weiteren Aspekt ist die Tragrolle so ausgestaltet, dass der Minimaldurchmesser des Rollstützbereichs mindestens 99,0 % des Maximaldurchmessers des Rollstützbereichs beträgt. Hierdurch ergeben sich Tragrollen, welche für eine Vielzahl an unterschiedlichen Förderaufgaben einsetzbar sind und gleichzeitig nur geringe Formabweichungen gegenüber herkömmlichen zylindrischen Walzenkörpern beinhalten und sich somit einfach aus letzteren herstellen lassen.

Gemäß einem weiteren Aspekt ist die Tragrolle so ausgestaltet, dass der Minimaldurchmesser des Rollstützbereichs höchstens 99,75 % des Maximaldurchmessers des Rollstützbereichs beträgt. Gemäß einem weiteren Aspekt ist die Tragrolle so ausgestaltet, dass der Minimaldurchmesser des Rollstützbereichs höchstens 99,5 % des Maximaldurchmessers des Rollstützbereichs beträgt. Hierdurch ergeben sich Tragrollen, welche für eine Vielzahl an unterschiedlichen Förderaufgaben einsetzbar sind und gleichzeitig nur geringe Anpassungsmaßnahmen gegenüber herkömmlichen zylindrischen Walzenkörpern erfordern.

Somit umfasst die vorliegende Erfindung also Tragrollen, bei denen der Minimaldurchmesser des Rollstützbereichs in einem Bereich von 95,0 % bis 99,8 % liegt, insbesondere in Bereichen von 98,0 % bis 99,8 %, von 99,0 % bis 99,8 %, von 95,0 % bis 99,75 %, von 98,0 % bis 99,75 %, von 99,0 % bis 99,75 %, von 95,0 % bis 99,5 %, von 98,0 % bis 99,5 % oder sogar nur von 99,0 % bis 99,5 %.

Gemäß einem weiteren Aspekt ist die Tragrolle so ausgestaltet, dass der Rollstützbereich zumindest teilweise eine reibungsvermindernde Beschichtung aufweist, insbesondere eine Beschichtung mit einem Polymer oder eine Lackierung. Als Materialien für eine derartige Beschichtung kommen grundsätzlich sämtliche Beschichtungsmaterialien in Frage, durch welche im Betrieb die Reibung zwischen der Oberfläche des Fördergurtes einerseits und der Oberfläche der Tragrolle andererseits vermindert wird - nämlich dem Rollstützbereich des Walzenelements, insbesondere bei der Bewegung des Fördergurtes über die Tragrollen. Derartige Beschichtungen werden auf das jeweils verwendete Material für die Oberfläche des Fördergurtes abgestimmt, wobei in der Regel Materialien eingesetzt werden, die eine signifikant geringere Gleitreibung an der jeweiligen Gurtoberfläche aufweisen als das unbeschichtete Walzenelement, welches typischerweise aus einem Stahl gefertigt ist. Zusätzlich können die Beschichtungen weitere Funktionalitäten bieten, beispielsweise die Abriebfestigkeit oder Korrosionsbeständigkeit der Tragrolle oder die elektrostatischen Eigenschaften der Fördergurt-Tragrolle-Kombination verbessern, wobei zu solchen Zwecken auch separate Beschichtungen vorgesehen sein können.

Die Erfindung beruht auf Erkenntnissen, welche kürzlich bei Messungen der Bahngeschwindigkeit der Mantelfläche von Tragrollen gewonnen wurden: Bei diesen Untersuchungen wurde überraschenderweise herausgefunden, dass die Oberflächengeschwindigkeiten auf der Mantelfläche von herkömmlichen (zylindrischen) Tragrollen geringer ausfallen als die entsprechenden Fördergurtgeschwindigkeiten. So kann für Schlauchgurtförderer etwa die Geschwindigkeitsdifferenz je nach Beladungszustand des Fördergurtes 1 % oder sogar mehr betragen, was unausweichlich zu Gleitreibung und/oder zu Energieverlusten an den Rändern der Stützbereiche zwischen Tragrolle und Fördergurt führen sollte.

Wird der (zumeist gemuldete) Fördergurt von einer Tragrolle abgestützt, deren Rotationsachse quer zur Förderrichtung angeordnet ist, so entsteht an dieser Stelle im Fördergurt (in Längsrichtung) eine lokale Fördergurtdelle, welche umso ausgeprägter ist, je größer die Gurtbeladung und je geringer die Gurtzugkraft ist. Diese lokale Verformung des Fördergurtes im Stützungsbereich der Tragrolle hat eine örtliche Krümmung der Längsträger des Fördergurtes senkrecht zu der Fördergurtoberfläche in Längsrichtung des Fördergurtes (Längsträgerkrümmung; Längskrümmung) zur Folge. Das Ausmaß der Längsträgerkrümmung ist dabei offenbar vor allem vom Aufbau des Fördergurtes, vom Gurtaufrollradius (Muldung), von der Beladung des Fördergurtes, von der Gurtzugkraft, von der Tragrollenanordnung und vom Tragrollenabstand abhängig. Dabei hat sich gezeigt, dass in der Kontaktzone, in welcher die Unterseite des Fördergurtes die Oberseite der Tragrolle berührt, die Oberflächengeschwindigkeiten der Laufschicht des Fördergurtes dann um so geringer sind, je größer dort die Krümmung der Längsträger des Fördergurtes in Längsrichtung ausfällt (also etwa bei einer größeren Gurtbeladung). Umgekehrt sind auch die Oberflächengeschwindigkeiten der Laufschicht umso höher, je geringer die Längskrümmung der Längsträger des Fördergurtes ausfällt. Tritt keine Krümmung auf, dann wird die Oberflächengeschwindigkeit der Laufschicht des Fördergurtes (und damit auch die Oberflächengeschwindigkeit auf der Mantelfläche der zylindrischen Tragrollen) maximal und ist dann mit der Fördergurtgeschwindigkeit identisch.

Wie nun beobachtet wurde, ist die Krümmung der Längsträger nicht über die gesamte Breite des Fördergurtes (also quer zur Förderrichtung) identisch, der Fördergurt weist vielmehr über seine Breite unterschiedlich starke Krümmungen auf. Dies führt dazu, dass sich über die Stützbereichsbreite der Tragrolle ebenfalls die Oberflächengeschwindigkeiten der Laufschicht des Fördergurtes ändern, sodass der Fördergurt also über seine Breite mit geringfügig unterschiedlichen Oberflächengeschwindigkeiten in der Kontaktzone auf die Tragwalze aufläuft.

Die Tragrolle verfügt über keinen eigenen Antrieb, sodass sich die Tragrollendrehzahl aus der Geschwindigkeit ergibt, mit welcher der Fördergurt in der Kontaktzone über die Tragrolle geführt wird - sowie zusätzlich aus dem Radius der Tragrolle, aus dem Ausmaß der lokalen Krümmung des Längsträgers über den Rollstützbereich sowie aus dem Abstand zwischen der Außenseite der unteren Deckplatte und der axialen Mitte der Längsträger, welche bei Stahlseilgurten beispielsweise 10 mm und mehr betragen kann. Über die Breite des Stützbereichs (also entlang oder parallel zu der Tragrollenachse) ist die Längsträgerkrümmung nicht konstant, diese erreicht in der Regel ihren Maximalwert in der Mitte des Stützbereichs und ihren Minimalwert am Rande des Stützbereichs. Somit ist die Auflaufgeschwindigkeit der unteren Deckplatte des Fördergurtes im Stützbereich über die Breite des Stützbereichs auch unterschiedlich. In der Mitte des Stützbereichs ist die Geschwindigkeit der unteren Deckplatte des Fördergurtes kleiner als am Rande des Stützbereichs, wobei die Geschwindigkeitsdifferenz in der Regel von Bruchteilen eines Prozents zu bis einigen Prozente ausmachen kann.

Da eine Tragrolle mit einem einstückigen Walzenelement nur jeweils eine einzige Rotationsgeschwindigkeit annehmen kann, führen die unterschiedlichen Auflaufgeschwindigkeiten der Laufschicht des Fördergurtes auf die Mantelfläche der zylindrischen Tragrolle dazu, dass sich in der Kontaktzone gegenläufige Schubspannungen ausbilden, welche zu Verformungen der untere Deckplatte führen können, insbesondere zu einem lokalen Gleiten des Fördergurtes auf der Mantelfläche der Tragrolle im Bereich der Kontaktzone. Mit der Verformung wie auch mit den lokalen Gleitphänomenen gehen irreversible Energieverluste einher, welche zum Laufwiderstand beitragen. Diese lassen sich schwer quantifizieren. Anhand der vorliegenden Untersuchungen wird für eine Differenz zwischen der Fördergurtgeschwindigkeit und der Oberflächengeschwindigkeit der Tragrolle im Bereich von 0,2 % bis 1,0 % die Schlupfleistung zu etwa 0,1 % bis 0,5 % des Produktes aus Tragrollenstützkraft und Gurtgeschwindigkeit abgeschätzt, wofür eine Erhöhung des Gesamtlaufwiderstands um 5 % bis 20 % zu erwarten ist.

Um die Energieverluste in der Kontaktzone zwischen der Tragrolle und dem Fördergurt infolge der unterschiedlichen Krümmungen der Zugstränge über die Breite des Fördergurtes zu reduzieren, ist eine Profilierung der Tragrolle im Bereich der Kontaktzone vorgesehen. Dazu ist die Tragrolle derart ausgebildet, dass im Kontaktbereich zum Fördergurt die Umfangsgeschwindigkeit der Tragrolle zumindest in etwa gleich der Oberflächengeschwindigkeit der unteren Deckplatte des Fördergurtes ist (Gurtoberflächengeschwindigkeit), wobei die über die Breite des Fördergurtes unterschiedlichen Zugträgerkrümmungen in der Kontaktzone berücksichtigt werden. Dies wird erfindungsgemäß dadurch erreicht, dass der Durchmesser der Mantelfläche des Walzenelements nicht über die Breite des Fördergurtes im Bereich der Kontaktzone konstant ist. Vielmehr weist der Rollstützbereich unterschiedliche Durchmesser der Mantelfläche des Walzenelements auf, wobei der Durchmesser der Mantelfläche dort größer ausfällt, wo der Fördergurt im Betrieb einer stärkeren längsbezogenen Belastung und damit einer stärkeren Längskrümmung der Zugträger ausgesetzt ist. Dabei wird der Durchmesser so gewählt, dass über die gesamte Breite des Fördergurtes die Umfangsgeschwindigkeit der Tragrolle in jeder Längsposition der Kontaktzone gleich der Oberflächengeschwindigkeit der unteren Deckplatte des Fördergurtes ist.

Wie die Untersuchungen gezeigt haben, ist bei Tragrollen für existierende Gurtförderanlagen in den meisten Fällen eine Verringerung des Durchmessers des Rollstützbereichs des Walzenelements um maximal 0,2 % bis 2,0 % hinreichend, um zu gewährleisten, dass die Umfangsgeschwindigkeit der Tragrolle über die Breite des Fördergurtes gleich der Oberflächengeschwindigkeit der unteren Deckplatte des Fördergurtes ist, eine größere Verringerung ist lediglich in wenigen Konstellationen erforderlich (etwa bei überladenen Fördergurten oder bei Schwerstlastförderbetrieb).

Gemäß der vorliegenden Erfindung ist die obige Tragrolle so ausgestaltet, dass das Walzenelement einen ersten Walzenbereich und einen zweiten Walzenbereich umfasst, von denen der erste Walzenbereich an einem Ende des Walzenelements angeordnet ist und von denen der zweite Walzenbereich neben dem ersten Walzenbereich angeordnet ist, wobei der Rollstützbereich zumindest in einem Teil des ersten Walzenbereichs den Maximaldurchmesser aufweist, und wobei der Rollstützbereich zumindest in einem Teil des zweiten Walzenbereichs den Minimaldurchmesser aufweist. Die Walzenbereiche stellen hierbei Teilbereiche des Walzenelements dar, die in axialer Abfolge angeordnet sind. Der erste Walzenbereich befindet sich häufig an oder in der Nähe von einem Ende des Walzenelements und ist daher einem der Tragrollenböden der Tragrollenwalze benachbart. Der zweite Walzenbereich ist dann neben dem ersten Walzenbereich angeordnet ist, sodass sich für diesen Teil des Walzenelements in axialer Richtung die Abfolge "erster Tragrollenboden - erster Walzenbereich - zweiter Walzenbereich" ergibt. Neben dem zweiten Walzenbereich ist dann ein weiterer Walzenbereich angeordnet.

Zumindest innerhalb eines Teils (Teilbereichs) des ersten Walzenbereichs weist der Rollstützbereich den Maximaldurchmesser auf und zumindest innerhalb eines Teils (Teilbereichs) des zweiten Walzenbereichs weist der Rollstützbereich den Minimaldurchmesser auf. Dies bedeutet, dass der Rollstützbereich innerhalb des ersten Walzenbereichs entweder einen konstanten Durchmesser aufweist, nämlich den Maximaldurchmesser, oder dass der Rollstützbereich an einer Position oder an mehreren Positionen den Maximaldurchmesser aufweist. An den übrigen Positionen des ersten Walzenbereichs weist der Rollstützbereich dann Durchmesser auf, welche zwar kleiner sind als der Maximaldurchmesser, die aber dennoch größer sind als oder gleichgroß sind wie der Minimaldurchmesser. Gleichzeitig weist der Rollstützbereich innerhalb des zweiten Walzenbereichs entweder einen konstanten Durchmesser auf, nämlich den Minimaldurchmesser, oder der Rollstützbereich weist an einer Position oder an mehreren Positionen den Minimaldurchmesser auf, wobei der Rollstützbereich an den übrigen Positionen des zweiten Walzenbereichs dann Durchmesser aufweist, welche zwar größer sind als der Minimaldurchmesser aber gleichzeitig kleiner als oder gleichgroß wie der Maximaldurchmesser.

Mit anderen Worten betrifft die vorliegende Erfindung also auch eine Tragrolle für einen Fördergurt, die Tragrolle umfassend ein Walzenelement mit einer Mantelfläche, wobei das Walzenelement rotationssymmetrisch um eine Rotationsachse ausgebildet ist, wobei das Walzenelement entlang seiner axialen Ausdehnung hinsichtlich der Mantelfläche unterschiedliche Durchmesser mit einem Maximaldurchmesser sowie mit einem Minimaldurchmesser aufweist, wobei hinsichtlich der Mantelfläche kein Durchmesser des Walzenelements größer ist als der Maximaldurchmesser und kein Durchmesser des Walzenelements kleiner ist als der Minimaldurchmesser, wobei das Walzenelement einen ersten Walzenbereich aufweist, der an einem Ende des Walzenelements angeordnet ist und in welchem ein Teilbereich liegt, in dem das Walzenelement den Maximaldurchmesser aufweist, wobei das Walzenelement einen zweiten Walzenbereich aufweist, der neben dem ersten Walzenteilbereich angeordnet ist und in welchem ein Teilbereich liegt, in dem das Walzenelement den Minimaldurchmesser aufweist, wobei der Minimaldurchmesser des Walzenelements im zweiten Walzenbereich mindestens 95 % und höchstens 99,8 % des Maximaldurchmessers des Walzenelements im ersten Walzenbereich beträgt. Der Durchmesser des Walzenelements hinsichtlich der Mantelfläche entspricht dabei dem Durchmesser der Mantelfläche, sodass hinsichtlich der Mantelfläche der Minimaldurchmesser des Walzenelements und der Maximaldurchmesser des Walzenelements also den Minimaldurchmesser beziehungsweise Maximaldurchmesser des Rollstützbereichs darstellt.

Erfindungsgemäß ist die Tragrolle ferner so ausgestaltet, dass dabei das Walzenelement einen dritten Walzenbereich aufweist, welcher an einem weiteren Ende des Walzenelements angeordnet ist, wobei das weitere Ende dem Ende des Walzenelements mit dem ersten Walzenbereich gegenüber angeordnet ist, sodass der zweite Walzenbereich in axialer Richtung zwischen dem ersten Walzenbereich und dem dritten Walzenbereich angeordnet ist, wobei der Rollstützbereich zumindest in einem Teil des dritten Walzenbereichs den Maximaldurchmesser aufweist. Der dritte Walzenbereich stellt - ebenso wie der erste Walzenbereich und der zweite Walzenbereich - einen Teilbereich des Walzenelements dar. Der dritte Walzenbereich befindet sich an dem anderen Ende des Walzenelements, welches auf der Tragrolle dem Ende mit dem ersten Walzenbereich gegenüberliegt, sodass sich für diesen Teil des Walzenelements in axialer Richtung die Abfolge "erster Tragrollenboden - erster Walzenbereich - zweiter Walzenbereich - dritter Walzenbereich - zweiter Tragrollenboden" ergibt.

Demzufolge weist der Rollstützbereich also in jedem seiner endständigen Abschnitte - im ersten Walzenbereich und im dritten Walzenbereich - jeweils an einer Position oder an mehreren Positionen den Maximaldurchmesser auf und im mittleren Abschnitt - dem zweiten Walzenbereich - an einer Position oder an mehreren Positionen den Minimaldurchmesser.

Dabei ist es möglich, dass das Walzenelement in axialer Richtung symmetrisch ausgebildet ist, sodass eine erste Hälfte des Walzenelements, in welcher der erste Walzenbereich angeordnet ist, spiegelsymmetrisch zu einer zweiten Hälfte des Walzenelements ist, in welcher der dritte Walzenbereich angeordnet ist, wobei die Spiegelebene den zweiten Walzenbereich mittig und rechtwinklig zur Rotationsachse unterteilt. Die Spiegelebene ist demzufolge in radialer Richtung ausgerichtet und schneidet daher die Rotationsachse in einem rechten Winkel, sodass das Walzenelement auf der einen Hälfte der Tragrolle, welche den ersten Tragrollenboden aufweist, bei Spiegelung an dieser Spiegelebene identisch zu dem Walzenelement auf der anderen Hälfte der Tragrolle ausgebildet ist (spiegelidentisch), welche den zweiten Tragrollenboden aufweist.

Stattdessen ist es aber auch möglich, dass das Walzenelement in axialer Richtung asymmetrisch ausgebildet ist. Hierbei weisen insbesondere die erste Hälfte des Walzenelements, in welcher der erste Walzenbereich angeordnet ist (und welche sich an dem ersten Tragrollenboden befindet), und die zweite Hälfte des Walzenelements, in welcher der dritte Walzenbereich angeordnet ist (und welche sich an dem zweiten Tragrollenboden befindet), untereinander keine Symmetrie in axialer Richtung auf (wobei natürlich die Rotationssymmetrie auch weiterhin gegeben ist). Dies betrifft neben einer vollständig asymmetrischen Ausgestaltung beispielsweise auch den Fall, dass eine partielle Spiegelebene existiert, welche zwar rechtwinklig zur Rotationsachse angeordnet ist, die Rotationsachse in axialer Ausdehnung aber nicht in der Mitte der Rotationsachse schneidet, sodass das Walzenelement also Seitenunterschiede zeigt.

Grundsätzlich kann die Tragrolle bei den vorgenannten Ausbildungen derart ausgestaltet sein, dass der Durchmesser des Rollstützbereichs von einer ersten Stelle, an welcher der Rollstützbereich den Maximaldurchmesser aufweist, bis zu einer zweiten Stelle, an welcher der Rollstützbereich den Minimaldurchmesser aufweist, monoton fällt. Als monoton fallend gilt der Durchmesser des Rollstützbereichs dann, wenn der Durchmesser von der ersten Stelle (Position) zu der zweiten Stelle (Position) mit dem Fortschreiten in axialer Richtung stets abnimmt oder gleichgroß bleibt, dort aber nicht zunimmt. Für ein symmetrisches Walzenelement etwa, welches den zuvor beschriebenen ersten Walzenbereich, zweiten Walzenbereich und dritten Walzenbereich aufweist, ergibt sich so im einfachsten Fall ein einfach tailliertes Walzenelement, beispielsweise in Form zweier über die Deckflächen miteinander verbundener Kegelstümpfe (Sanduhr- oder Diabolo-Form).

Unabhängig von einer in axialer Richtung symmetrischen oder asymmetrischen Ausgestaltung kann das (rotationssymmetrische) Walzenelement natürlich beliebige geeignete Formen aufweisen. So kann das - zweidimensionale - Profil des Rollstützbereichs also etwa das einer Geraden, eines Ausschnitts einer Hyperbel, eines Ausschnitts einer Parabel, eines Ausschnitts einer Sinuskurve, eines Ausschnitts des Innenbereichs eines Toroids oder aufgeschnittenen Torus sein oder aber eine beliebige andere regelmäßige oder unregelmäßige geometrische Form aufweisen.

Typischerweise ist die Tragrolle so ausgebildet, dass der Rollstützbereich des Walzenelements dort den geringsten Durchmesser aufweist, wo der Fördergurt der höchsten Belastung ausgesetzt ist. Im Geradelauf ist dieser höchstbelastete Bereich in der Regel mittig auf dem Fördergurt zu finden. Wird der Fördergurt nach unten von einer einzigen Tragrolle abgestützt, dann sollte diese unterhalb des Fördergurtes angeordnete Tragrolle also in axialer Richtung (und somit quer zur Förderrichtung) symmetrisch ausgebildet sein

Bei einer asymmetrischen Belastung der Tragrolle - beispielsweise bei Tragrollen, die am Randbereich eines gemuldeten Fördergurtes oder an der Seite eines gerollten Fördergurtes angeordnet sind und diesen zur Seite hin abstützen (Seitentragrolle) oder bei oberen Tragrollen eines gerollten Fördergurtes) kann es unter Umständen vorteilhafter sein, den Rollstützbereich des Walzenelements derart auszugestalten, dass dieser nicht in der Mitte der Tragrolle den geringsten Durchmesser aufweist sondern vielmehr etwas seitlich versetzt oder sogar am Rand der Tragrolle. Für gemuldete oder gerollte Fördergurte lässt sich bei einer gleichzeitigen Verwendung von symmetrischen Tragrollen und asymmetrischen Tragrollen ein besonders geringer Gesamtlaufwiderstand realisieren.

Gemäß einem weiteren Aspekt ist die Tragrolle so ausgestaltet, dass die Tragrolle einen einzigen Walzenring aufweist, dessen Mantelfläche den Rollstützbereich des Walzenelements bildet. Alternativ kann die Tragrolle aber auch so ausgestaltet sein, dass die Tragrolle als segmentierte Tragrolle ausgebildet ist, welche mindestens zwei Walzenringe aufweist (also mehr als einen Walzenring). Als Walzenring wird ein zusammenhängendes Element bezeichnet, welches zwei Walzenringböden mit Lagerhalterungen sowie ein Walzensegment aufweist, dessen Mantelfläche zumindest einen Teilbereich des Rollstützbereichs des Walzenelements bildet, wobei im Falle einer segmentierten Tragrolle die einzelnen Walzenringe auf derselben Achse drehbar gelagert sind.

Gemäß einem weiteren Aspekt ist die Tragrolle also so ausgestaltet, dass diese ein Walzenelement mit einem rotationssymmetrischen Rollstützbereich aufweist, wobei der größte Durchmesser des Rollstützbereichs in beiden Endabschnitten des Walzenelements vorliegt und der kleinste Durchmesser des Rollstützbereichs in einem Mittenabschnitt des Walzenelements vorliegt, wo der Rollstützbereich ausgebildet ist, einen Fördergurt rollend abzustützen, wobei der kleinste Durchmesser des Rollstützbereichs mindestens 95 % und höchstens 99,8 % des größten Durchmessers des Rollstützbereichs. Die beiden Endabschnitte sind an dem ersten Walzenbereich und dem dritten Walzenbereich des Walzenelements gelegen und der Mittenabschnitt am zweiten Walzenbereich des Walzenelements.

Ferner umfasst die Erfindung eine Tragrollenstation gemäß Anspruch 10 mit mindestens einer der vorgenannten Tragrollen, wobei die Tragrollenstation als Tragrollenstuhl oder als Tragrollengirlande ausgebildet ist. Eine Tragrollenstation ist ein Tragrollenstützelement, welches als Tragrollenhalterung dient und den Fördergurt auf dem Untergrund (Boden) abstützt. Typischerweise weist ein Traggerüst mehrere Tragrollenstationen auf. Tragrollenstationen sind Stützungspunkte für den laufenden Fördergurt und damit Bestandteile des Traggerüsts der Förderstecke. Tragrollenstationen können als starre Gerüststruktur, in welche die Tragrollen fix eingehängt sind. Alternativ können Tragrollenstationen auch als bewegliche Struktur ausgebildet sein, in welcher die Tragrollen beweglich aufgehängt sind und in denen die Achsen der einzelnen Tragrollen relativ zueinander bewegbar angeordnet sind. Als starre Gerüststruktur kann insbesondere ein Tragrollenstuhl zum Einsatz gelangen. Als bewegliche Struktur wird typischerweise eine Tragrollengirlande verwendet, in der die Achsen mehrerer Tragrollen linear-flexibel miteinander verbunden sind, etwa über Ketten. Die Tragrollengirlande wird dabei in eine starre Tragkonstruktion entweder fix oder federnd (etwa über Pufferelemente wie Gummipuffer) eingehängt.

Die Geometrie und Anordnung der Tragrollen in einer Tragrollenstation hängt von der Fördergurtbreite, der Art der Förderung und dem Verlauf der Förderstrecke ab. Allgemein kann im Obertrum etwa für Fördergurte in Flachform und einen geraden Verlauf der Förderstrecke bei niedriger Beladung des Fördergurtes bereits eine einzige Tragrolle pro Tragrollenstation ausreichend sein, während bei einem gemuldeten Fördergurt pro Stützungspunkt mindestens zwei Tragrollen in V-Form, typischerweise drei Tragrollen in U-Form verwendet werden (wobei für gemuldete Fördergurte auch vier, fünf oder noch mehr Tragrollen pro Stützungspunkt Verwendung finden), für Schlauchgurte in der Regel mehr als drei Tragrollen, typischerweise sechs Tragrollen, die in O-Form angeordnet sind. Im Untertrum wird der leere Fördergurt in der Regel von einer durchgehenden Tragrolle, von zwei V-förmig angeordneten Tragrollen oder von drei U-förmig angeordneten Tragrollen geführt; seltener - etwa in untertägigen Strecken, wo einerseits erzhaltiges Fördergut abgeführt andererseits Abraum zum Verfüllen zugeführt wird - gelangen auch Kombinationen aus gerolltem Obertrum und gerolltem Untertrum zum Einsatz. Üblicherweise wird die Anordnung der Tragrollen so gewählt, dass sich ein Gurtquerschnitt ergibt, welcher eine optimale Ablage des Schüttguts sowie eine sichere Förderung desselben ermöglicht, ohne dass der Fördergurt dabei zu stark in Querrichtung gebogen wird.

Gemäß einem weiteren Aspekt ist die Tragrollenstation so ausgestaltet, dass die Tragrollenstation mindestens drei Tragrollen aufweist, die derart angeordnet sind, dass die Rotationsachsen der mindestens drei Tragrollen in einer vertikalen Ebene oder in mehreren zueinander parallelen vertikalen Ebenen liegen, wobei die mindestens drei Tragrollen eine erste Tragrolle, eine zweite Tragrolle und eine dritte Tragrolle umfassen, wobei die erste Tragrolle in der Tragrollenstation so angeordnet ist, dass die Rotationsachse zumindest im Wesentlichen horizontal ausgerichtet ist und wobei die Rotationsachse der zweiten Tragrolle und die Rotationsachse der dritten Tragrolle jeweils schräg zu der Rotationsachse der ersten Tragrolle angeordnet ist, und wobei die erste Tragrolle die zuvor aufgeführte symmetrische Tragrolle ist.

Diese Ausgestaltung der der Tragrollenstation gelangt zum Abstützen und Führen von gemuldeten Fördergurten oder gerollten Fördergurten zum Einsatz. Die Tragrollen dieser Tragrollenstation sind so angeordnet, dass ihre Rotationsachsen in einer vertikalen Ebene liegen - alternativ auch in mehreren vertikalen Ebenen, die parallel zueinander ausgerichtet sind. Hierdurch wird bei einer Rollbewegung aller Tragrollen dieser Tragrollenstation eine Bewegung des abgestützten Fördergurtes in dieselbe Richtung ermöglicht. Bei einer Anordnung der Rotationsachsen in einer Ebene wird eine besonders kompakte Tragrollenstation realisiert, bei der die Rotationsachsen auf einer mehrfach abgeknickten oder gebogenen Linie angeordnet sind; eine derartige Ausbildung ist etwa für Tragrollengirlanden üblich. Bei einer Anordnung der Rotationsachsen in mehreren zueinander parallelen Ebenen können die Tragrollen in Förderrichtung versetzt zueinander positioniert werden, sodass deren Rotationsachsen nicht unmittelbar aneinanderstoßen. Infolge dieses Versatzes ist es möglich, die Tragrollen derart anzuordnen, dass diese die untere Deckplatte über die gesamte Breite des Fördergurtes stabil führen, indem die Rollstützbereiche der versetzt angeordneten Tragrollen verlängert werden können und so in Querrichtung überlappend den Fördergurt stützen.

Die Tragrollenstation beinhaltet hierbei mindestens drei Tragrollen, für gemuldete Fördergurte in U-Form oder V-Form typischerweise drei, vier, fünf oder mehr Tragrollen, für gerollte Fördergurte in O-Form typischerweise sechs oder mehr Tragrollen. Dabei stützt die erste Tragrolle in der Regel den Fördergurt nach unten hin ab, sodass die erste Tragrolle eine horizontale oder zumindest im Wesentlichen horizontale Rotationsachse aufweist und unterhalb des Fördergurtes angeordnet ist. Zumindest im Wesentlichen horizontal bedeutet, dass die Rotationsachse nur unwesentlich von der Horizontalen abweicht, also gegenüber der Horizontalen eine Abweichung von maximal 5 ° aufweisen darf. Die zweite Tragrolle und die dritte Tragrolle stützen den Fördergurt nach unten und zusätzlich auch in seitlicher Richtung ab, sodass die Rotationsachsen der zweiten Tragrolle und der dritten Tragrolle schräg gegenüber der Horizontalen verlaufen. Damit stützen die zweite Tragrolle und die dritte Tragrolle die untere Deckplatte des Fördergurtes auch in seitlicher Richtung ab (wobei die vertikalen Ebenen, in der die Rotationsachsen der zweiten Tragrolle und der dritten Tragrolle liegen, gegenüber der vertikalen Ebene versetzt angeordnet sein können, in der die Rotationachse der ersten Tragrolle liegt). Für gemuldete Fördergurte ergibt sich so die angestrebte Muldenform. Für gerollte Fördergurte sind in der Regel eine gerade Anzahl an Tragrollen vorgesehen, welche derart ausgerichtet sind, dass zusätzlich zu der ersten Tragrolle auch eine weitere Tragrolle eine horizontale Rotationsachse aufweist, wobei diese weitere Tragrolle dann oberhalb des Schlauchs angeordnet ist, den der gerollte Fördergurt ausbildet. Die Rotationsachsen der übrigen Rollen verlaufen gegenüber der Horizontalen geneigt und stützen die untere Deckplatte des Fördergurtes entlang des gesamten Umfangs des Schlauches auch in seitlicher Richtung ab, sodass sich die angestrebte Rollenform ergibt. Die erste Tragrolle stützt den Fördergurt dabei in der Regel nach unten ab (in einer Position unterhalb des Fördergurtes) und ist in axialer Richtung symmetrisch ausgebildet. Grundsätzlich lässt sich eine Abstützung des Fördergurts an dessen Unterseite mit den zuvor beschriebenen Tragrollen auch über andere Anordnungen realisieren, beispielsweise mit zwei V-förmig angeordneten Tragrollen, über welche der Fördergurt geführt wird. Gemäß einem weiteren Aspekt ist die Tragrollenstation so ausgestaltet, dass die zweite Tragrolle und die dritte Tragrolle jeweils eine symmetrische Tragrolle der zuvor beschriebenen Art ist. Bei derartigen symmetrischen Tragrollen weist der Rollstützbereich des Walzenelements in der Mitte der Tragrolle den geringsten Durchmesser auf.

Gemäß einem weiteren Aspekt ist die Tragrollenstation so ausgestaltet, dass die zweite Tragrolle und die dritte Tragrolle jeweils asymmetrische Tragrollen der zuvor beschriebenen Art sind, wobei bei der zweiten Tragrolle und der dritten Tragrolle jeweils der zweite Walzenbereich in derjenigen Hälfte des jeweiligen Walzenelements liegt, welche neben der ersten Tragrolle angeordnet ist. Bei derartigen asymmetrischen Tragrollen weist der Rollstützbereich des Walzenelements den geringsten Durchmesser nicht in der Mitte der Tragrolle auf, sondern dieser befindet sich vielmehr gegenüber der Mitte seitlich verschoben oder sogar am Rand der Tragrolle.

Darüber hinaus sind natürlich auch weitere Ausgestaltungen der Tragrollenstation möglich, etwa solche, bei denen die seitlichen Tragrollen sowohl symmetrische Tragrollen als auch asymmetrische Tragrollen umfassen, also zum Beispiel eine Tragrollenstation, bei der die zweite Tragrolle eine symmetrische Tragrolle der zuvor beschriebenen Art ist und die dritte Tragrolle eine asymmetrische Tragrolle der zuvor beschriebenen Art.

Ferner umfasst die Erfindung eine Gurtförderanlage gemäß Anspruch 14 mit mindestens einer der zuvor beschriebenen Tragrollenstationen sowie mit einem gemuldeten Fördergurt und/oder einem gerollten Fördergurt. Dies beinhaltet eine Gurtförderanlage mit einem Fördergurt, der im Obertrum wie im Untertrum als gemuldeter Fördergurt geführt wird, eine Gurtförderanlage mit einem Fördergurt, der im Obertrum wie im Untertrum als gerollter Fördergurt geführt wird, eine Gurtförderanlage mit einem Fördergurt, der im Obertrum als gerollter Fördergurt und im Untertrum als gemuldeter Fördergurt geführt wird, eine Gurtförderanlage mit einem Fördergurt, der im Obertrum als gemuldeter Fördergurt und im Untertrum als gerollter Fördergurt geführt wird, oder auch eine Gurtförderanlage mit einem Fördergurt, der im Obertrum als gemuldeter oder gerollter Fördergurt und im Untertrum als flacher Fördergurt geführt wird.

Neben der mindestens einen Tragrollenstation kann die Gurtförderanlage weitere Elemente und Baugruppen aufweisen, die typischerweise bei Gurtförderanlagen vorgesehen sind, also beispielsweise eine Antriebsstation oder mehrere Antriebsstationen zum Antreiben des Fördergurtes für einen Transport des Fördergutes (im Obertrum) in Förderrichtung einschließlich Antriebsmotoren, Umlenkstationen zum Umlenken des Fördergurtes am Anfang und am Ende der Förderstrecke, Fördergutaufgabeeinrichtungen zur Aufgabe des Fördergutes auf den Fördergurt am Anfangspunkt der Förderstrecke wie etwa Schurren, Förderablaufeinrichtungen zum Abwurf und Abführen des Fördergutes am Endpunkt der Förderstrecke, Fördergutabstreifungseinrichtungen wie etwa Pflugabstreifer oder Kratzer, Gurtreinigungsvorrichtungen wie etwa Reinigungsbürsten, Spanneinrichtungen zum Spannen des Fördergurtes etwa mittels Spanntrommeln, Gurtwendeeinrichtungen und dergleichen.

Ferner umfasst die Erfindung ein Verfahren gemäß Anspruch 15 zum Abstützen und Führen eines gemuldeten oder gerollten bewegten Fördergurtes, der quer zur Bewegungsrichtung eine Querkrümmung aufweist, wobei der Fördergurt im Bereich der Querkrümmung an zumindest einer der zuvor beschriebenen Tragrollen entlanggeführt und durch den Rollstützbereich abgestützt wird, insbesondere wenn der Krümmungsradius der Querkrümmung des Fördergurtes höchstens 5 m beträgt oder höchstens 2 m oder sogar höchstens 1 m.

Beim Betrieb einer Gurtförderanlage wird zum Fördern des Förderguts ein gemuldeter Fördergurt oder ein gerollter Fördergurt in Förderrichtung bewegt, also in Längsrichtung des Fördergurtes und damit zumindest im Wesentlichen parallel zu den Längsträgern des Fördergurtes. Dabei weist der Fördergurt infolge der Ausbildung der Muldenform beziehungsweise Schlauchform auch quer zu der Bewegungsrichtung (Förderrichtung) des Fördergurtes eine Krümmung auf, die Querkrümmung. Im Bereich der Querkrümmung, also dort, wo der Fördergurt eine solche Querkrümmung aufweist, wird der Fördergurt an zumindest einer der zuvor beschriebenen Tragrollen entlanggeführt, typischerweise an mehreren Tragrollen, die in einem Tragrollenstuhl angeordnet sind. An dieser Stelle wird der Fördergurt im Bereich der Querkrümmung durch den Rollstützbereich der einen Tragrolle oder durch die Rollstützbereiche der mehreren Tragrollen abgestützt. Insbesondere bei gemuldeten oder gerollten Fördergurten ist die Querkrümmung nicht über die gesamte Breite der Tragrolle konstant, vielmehr wechseln gerade im Tragrollenabstützungsbereich stark gekrümmte Bereiche (in den Ecken) und flache Bereiche (Tragrollenabstützung) entlang der Gurtbreite ab. Dieses Verfahren ist besonders günstig, wenn der Krümmungsradius der Querkrümmung des Fördergurtes relativ eng ist, also etwa wenn der Krümmungsradius der Querkrümmung des Fördergurtes höchstens 5 m beträgt oder sogar höchstens 2 m oder nur höchstens 1 m, da dort bei Verwendung konventioneller Tragrollen ein besonders starker Abrieb auftreten würde, welcher sich durch die Verwendung der erfindungsgemäß ausgebildeten Tragrollen verringern oder sogar vermeiden lässt.

Gemäß einem weiteren Aspekt wird das Verfahren so durchgeführt, dass als die zumindest eine Tragrolle eine Tragrolle mit einem Walzenelement mit einem Rollstützbereich verwendet wird, dessen entlang der axialen Ausdehnung unterschiedliche Durchmesser jeweils mit der Querkrümmung des Fördergurtes korrespondieren. Die eine Tragrolle oder die mehreren Tragrollen weisen dann jeweils ein Walzenelement mit einem Rollstützbereich auf, das sich entlang der axialen Ausdehnung (und damit in Richtung der Rotationsachse) zumindest bereichsweise verjüngt, gegebenenfalls sogar einfach oder mehrfach tailliert ausgebildet ist. Dabei ist es günstig, wenn die entlang der axialen Ausdehnung unterschiedlichen Durchmesser des Rollstützbereichs des Walzenelements der Tragrolle jeweils mit der (lokalen) Querkrümmung des Fördergurtes korrespondieren, wenn also über die axiale Ausdehnung des Walzenelements (und damit über die axiale Ausdehnung der Tragrolle) die Durchmesser des Rollstützbereichs dem sich bei der Querkrümmung einstellenden Profil des Fördergurtes quer zur Förderrichtung folgen und der Rollstützbereich entlang der axialen Ausdehnung eine umso stärkere Taillierung oder Verjüngung aufweist, je stärker die Querkrümmung an dieser Stelle ist (und damit je kleiner deren Krümmungsradius ist).

Die Erfindung soll im Folgenden unter Bezugnahme auf die beigefügten Zeichnungen von besonders vorteilhaften Beispielen näher beschrieben werden, woraus sich zudem auch weitere Vorteile und Anwendungsmöglichkeiten ergeben. Es zeigen jeweils schematisch
Fig. 1 eine figürliche Darstellung einer Tragrolle mit einem Fördergurt in Seitenansicht,
Fig. 2 eine Vorderansicht einer Tragrolle gemäß einem Aspekt der vorliegenden Erfindung,
Fig. 3.1 eine Vorderansicht einer Tragrolle gemäß einem weiteren Aspekt der vorliegenden Erfindung,
Fig. 3.2 eine Vorderansicht einer Tragrolle gemäß einer von der vorliegenden Erfindung nicht abgedeckten Ausgestaltung,
Fig. 4 einen Querschnitt eines gemuldeten Fördergurtes an einer Tragrollenstation gemäß einem Aspekt der vorliegenden Erfindung
Fig. 5 einen Querschnitt eines gerollten Fördergurtes an einer Tragrollenstation gemäß einem weiteren Aspekt der vorliegenden Erfindung.

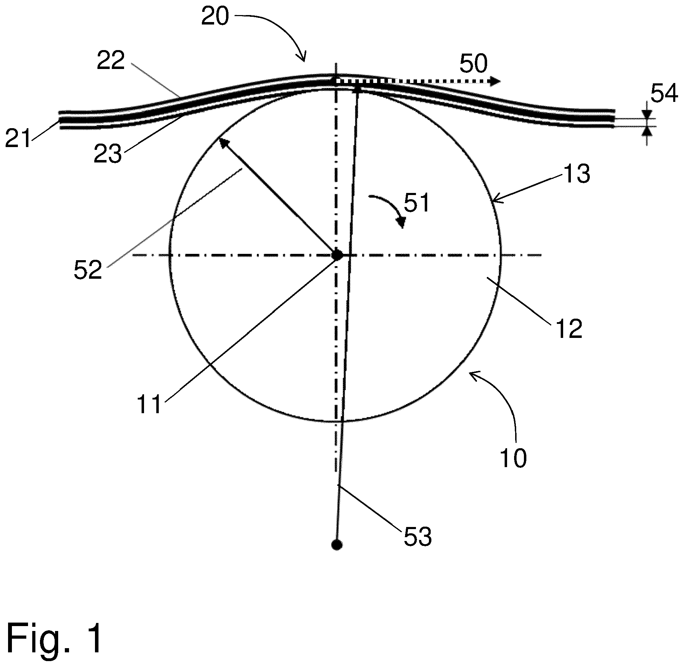

Es sei darauf hingewiesen, dass die in den Figuren 1 bis 5 dargestellten Tragrollen nicht maßstabsgetreu wiedergegeben sind. Dabei kann insbesondere kann das Verhältnis von Minimaldurchmesser des Rollstützbereichs zu Maximaldurchmesser des Rollstützbereichs von den erfindungsgemäß einzuhaltenden Werten abweichen, da der Größenunterschied von Minimaldurchmesser und Maximaldurchmesser des Rollstützbereichs derartig klein ausfällt, dass in der zeichnerischen Darstellung kein Unterschied sichtbar wäre, weshalb in diesen schematischen Zeichnungen - lediglich aus illustrativen Gründen - der Größenunterschied übertrieben groß dargestellt ist. Fig. 1 ist eine figürliche Darstellung einer Tragrolle 10 mit einem Fördergurt 20 in Seitenansicht, welche schematisch die Krümmung des Fördergurtes 20 in Längsrichtung zeigt. Die Tragrolle 10 ist rotationssymmetrisch bezüglich einer Rotationsachse 11 ausgebildet und um diese Rotationsachse 11 drehbar gelagert.

Dabei weist die Oberseite der Tragrolle 10 - nämlich die Außenseite des Rollstützbereichs des Walzenelements der Tragrolle 10 - einen Durchmesser auf (entsprechend dem doppelten Radius 52), der in axialer Richtung unterschiedlich groß ist (nicht dargestellt). Der Fördergurt 20 umfasst innenliegend einen Längsträger 21 sowie eine obere Deckplatte 22, auf welcher sich das Fördergut befindet (nicht dargestellt), und eine untere Deckplatte 23, welche in Kontakt mit der Oberseite der Tragrolle 10 steht, genauer gesagt mit der Oberseite des Rollstützbereichs des Walzenelements der Tragrolle 10. Bei der Bewegung des Fördergurtes 20 in Bewegungsrichtung 50 wird dieser von der Tragrolle 10 gestützt, wodurch die Tragrolle 10 in eine Drehbewegung in Rotationsrichtung 51 um ihre Rotationsachse 11 versetzt wird.

Infolge der Beladung mit Fördergut 26 hängt der Fördergurt 20 in der Stecke zwischen zwei aufeinanderfolgenden Tragrollen 10 durch, sodass der Fördergurt 20 eine Längskrümmung erfährt. Die Längskrümmung des Fördergurtes 20 lässt sich durch den lokalen Krümmungsradius 53 des Längsträgers 21 des Fördergurtes 20 quantifizieren. Dabei tritt der Krümmungsradius 53 in der Mitte des Kontaktbereichs auf, in welchem die Unterseite der unteren Deckplatte 23 mit der Oberseite des Rollstützbereichs des Walzenelements der Tragrolle 10 in Kontakt steht. Es wird nun vermutet, dass der Abstand 54 der Oberfläche (Unterseite) der unteren Deckplatte 23 von der Mitte des Längsträgers 21 zur Folge hat, dass aufgrund der Längskrümmung die Oberfläche der unteren Deckplatte 23 eine geringfügig andere Geschwindigkeit erfährt als die Mitte des Längsträgers 21. Dabei fällt über die Breite der Tragrolle 10 (entlang der axialen Ausdehnung der Tragrolle, also senkrecht zur Zeichenebene der Fig. 1) die Geschwindigkeitsdifferenz aufgrund einer zusätzlichen Querkrümmung des Fördergurtes 20 unterschiedlich groß aus. Da andererseits die Tragrolle 10 nur mit einer über die gesamte Breite der Tragrolle 10 konstanten Winkelgeschwindigkeit rotieren kann, kommt es im Fördergurt 20 im Kontaktbereich zu lokalen Spannungen. Diese Spannungen haben aufgrund von Reibungsverlusten im Kontakt mit der Tragrolle 10 einen höheren Laufwiderstand und damit auch einen höheren Verschleiß des Fördergurtes 20 zur Folge. Dieser Effekt lässt sich durch die erfindungsgemäße Tragrolle vermindern oder sogar verhindern.

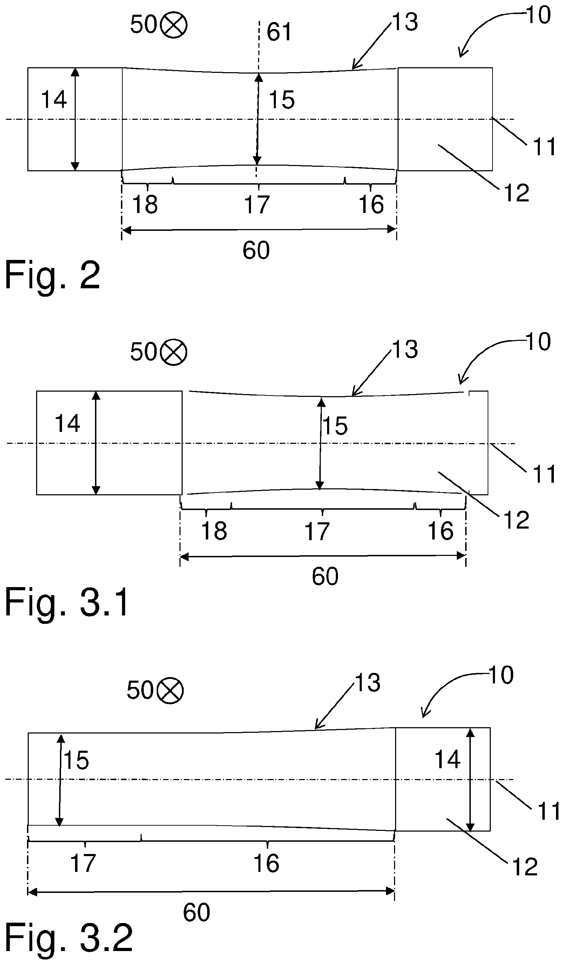

Fig. 2, Fig. 3.1 und Fig. 3.2 zeigen schematische Vorderansichten unterschiedlicher Ausgestaltungen einer Tragrolle 10, wobei die in Fig. 3.2 dargestellte Ausgestaltung von der vorliegenden Erfindung nicht abgedeckt ist. Die Tragrolle 10 ist jeweils um eine Rotationsachse 11 rotierbar ausgebildet und umfasst ein Walzenelement 12. Das Walzenelement 12 ist jeweils derart ausgestaltet, dass es zumindest in dessen Mittenbereich einen Rollstützbereich 13 aufweist, welcher als bezüglich der Rotationsachse 11 der Tragrolle 10 rotationsymmetrische Mantelfläche ausgebildet ist und im Betrieb mit dem Fördergurt in Kontakt tritt. Dadurch stützt der Rollstützbereich 13 den Fördergurt an dessen Unterseite und rollt dort ab (die Bewegungsrichtung 50 des - hier nicht dargestellten - Fördergurtes verläuft dabei senkrecht zur Darstellungsebene). Ferner ist das Walzenelement 12 jeweils derart ausgestaltet, dass zumindest an einem Endabschnitt davon ein Bereich vorgesehen ist, welcher im Betrieb nicht mit dem Fördergurt abstützend in Kontakt tritt.

Aus Gründen der Übersicht sind in Fig. 2, Fig. 3.1 und Fig. 3.2 Details zur konstruktiven Ausgestaltung der Rotationsachse 11 und der endseitigen Tragrollenböden einschließlich der jeweiligen Lagerhaltungen und Lager nicht dargestellt, hierfür können grundsätzlich sämtliche üblichen Varianten und Verbindungen verwendet werden, die für derartige Elemente üblich sind.

Bei der in Fig. 2 dargestellten Variante ist der Rollstützbereich 13 auf den Mittenbereich beschränkt, bei den in Fig. 3.1 und Fig. 3.2 dargestellten Varianten erstreckt sich der Rollstützbereich 13 jeweils auf einer Seite der Tragrolle 10 über den Mittenbereich hinaus in den dortigen Endabschnitt des Walzenelements 12 hinein.

Entlang der axialen Ausdehnung 60 des Rollstützbereichs 13 - also in axialer Richtung - weist der Rollstützbereich 13 unterschiedliche Durchmesser mit einem Maximaldurchmesser 14 und einem Minimaldurchmesser 15 auf, wobei der Minimaldurchmesser 15 des Rollstützbereichs 13 mindestens 95 % und höchstens 99,8 % des Maximaldurchmessers 14 des Rollstützbereichs 13 beträgt (in Fig. 2, Fig. 3.1 und Fig. 3.2). Der Unterschied zwischen Minimaldurchmesser 15 des Rollstützbereichs 13 und Maximaldurchmesser 14 des Rollstützbereichs 13 fällt also relativ klein aus und beträgt maximal 5 % des Maximaldurchmessers 14. Der Minimaldurchmesser 15 muss also innerhalb eines engeren Größenbereichs von 95 % bis 99,8 % liegen, wobei dieser sogar noch enger gewählt werden kann. So kann alternativ die Untergrenze des Größenbereichs für den Minimaldurchmesser 15 auch 98,0 % oder sogar nur 99,0 % des Maximaldurchmessers 14 betragen und/oder die Obergrenze des Größenbereichs für den Minimaldurchmesser 15 auch 99,75 % oder sogar nur 99,5 % des Maximaldurchmessers 14 betragen.

Bei den in Fig. 2 und Fig. 3.1 dargestellten Varianten weist der Rollstützbereich 13 den Maximaldurchmesser 14 jeweils an beiden äußeren Rändern (Fig. 2 und Fig. 3.1) auf, wo der Rollstützbereich 13 in einen Bereich übergeht, welcher im Betrieb nicht mit dem Fördergurt abstützend in Kontakt tritt. An dem Endabschnitt, der im Betrieb nicht mit dem Fördergurt abstützend in Kontakt tritt, ändert sich bei den dort dargestellten Varianten der Durchmesser des Walzenelements 12 in axialer Richtung nicht, sondern bleibt vielmehr im Wesentlichen konstant. Somit ist der Durchmesser des Walzenelements 12 mit dem Maximaldurchmesser 14 des Rollstützbereichs 13 identisch, wobei für den nicht abstützenden Bereich grundsätzlich aber auch andere Ausgestaltungen möglich sein können. So kann dieser in axialer Richtung etwa einen anderen Durchmesser als den Maximaldurchmesser 14 des Rollstützbereichs 13 oder auch unterschiedliche Durchmesser aufweisen und sich beispielsweise entlang der axialen Ausdehnung 60 verjüngen oder erweitern, sofern im Betrieb der Fördergurt dort nicht in Kontakt mit der Oberfläche des Walzenelements 12 tritt. (Es sei darauf hingewiesen, dass aus Gründen der Übersichtlichkeit auf dem Walzenelement 12 der Maximaldurchmesser 14 des Rollstützbereichs 13 nicht im Rollstützbereich 13 selbst eingezeichnet ist sondern außerhalb davon, also in dem Bereich, der im Betrieb nicht mit dem Fördergurt abstützend in Kontakt tritt; bei den dargestellten Ausgestaltungen ist der Durchmesser des Walzenelements 12 in letzterem Bereich konstant und mit dem Maximaldurchmesser 14 des Rollstützbereichs 13 identisch, sodass der eingezeichnete Durchmesser den Maximaldurchmesser 14 des Rollstützbereichs 13 zwar nicht hinsichtlich der Lage wiedergibt, wohl aber hinsichtlich der Größe.)

Die in Fig. 2 und Fig. 3.1 schematisch dargestellten Tragrollen 10 weisen jeweils an ihrem linken und rechten Endabschnitt Bereiche auf, welche im Betrieb nicht mit dem Fördergurt abstützend in Kontakt treten und deren Durchmesser jeweils dem Maximaldurchmesser 14 des Rollstützbereichs 13 entsprechen. Diese Bereiche gehen jeweils in den Rollstützbereich 13 über, sodass der Rollstützbereich 13 sowohl an seinem linken Rand als auch an seinem rechten Rand jeweils den Maximaldurchmesser 14 aufweist, nämlich im endständigen ersten Walzenbereich 16 des Walzenelements 12 und im endständigen dritten Walzenbereich 18 des Walzenelements 12, der dem ersten Walzenbereich 16 in axialer Richtung gegenüberliegt. Damit besitzt das Walzenelement 12 den größten Durchmesser des Rollstützbereichs 13 also in seinen beiden Endabschnitten.

Der Rollstützbereich 13 ist hier jeweils in axialer Richtung betrachtet symmetrisch ausgebildet, wobei der Minimaldurchmesser 15 des Rollstützbereichs 13 im Mittenabschnitt des Walzenelements 12 vorliegt, nämlich in der Mitte des Rollstützbereichs 13. Der Minimaldurchmesser 15 des Rollstützbereichs 13 liegt damit im zweiten Walzenbereich 17 des Walzenelements 12 vor, welcher Bereich unmittelbar zwischen dem ersten Walzenbereich 16 und dem dritten Walzenbereich 18 an diese angrenzend angeordnet ist. Von den beiden Rändern des Rollstützbereichs 13 hin zu der Mitte des Rollstützbereichs 13, also von den beiden Stellen, wo der Rollstützbereich 13 jeweils den Maximaldurchmesser 14 aufweist, zu der Stelle, wo Rollstützbereich 13 den Minimaldurchmesser 15 aufweist, nimmt der Durchmesser des Rollstützbereichs 13 kontinuierlich ab, sodass dort jeweils der Durchmesser monoton fällt.

In Fig. 2 ist eine Tragrolle 10 dargestellt, bei welcher das Walzenelement 12 in axialer Richtung symmetrisch ausgebildet ist. Die linke Seite des Walzenelements 12, welche den ersten Walzenbereich 16 und die erste Hälfte des zweiten Walzenbereichs 17 enthält, ist spiegelsymmetrisch zur rechten Seite des Walzenelements 12 ausgebildet, welche den dritten Walzenbereich 18 und die zweite Hälfte des zweiten Walzenbereichs 17 enthält, wobei die Spiegelebene 61, welche die linke Seite und die rechte Seite des Walzenelements voneinander trennt, das Walzenelement 12 rechtwinklig zur Rotationsachse 11 mittig im dritten Walzenbereich 18 schneidet.

Die in Fig. 2 dargestellte Tragrolle 10 kann zum Abstützen von gemuldeten oder gerollten Fördergurten eingesetzt werden, beispielsweise in einer Tragrollenstation für gemuldete oder gerollte Fördergurte, in welcher alle Tragrollen identisch ausgebildet sind, als untere Tragrolle (oder untere Tragrollen) in Tragrollenstationen für gemuldete oder gerollte Fördergurte, welche den Fördergurt jeweils nach unten abstützt, oder als obere Tragrolle (oder obere Tragrollen) in Tragrollenstationen für gerollte Fördergurte.

In Fig. 3.1 ist eine Tragrolle 10 dargestellt, bei welcher das Walzenelement 12 in axialer Richtung asymmetrisch ausgestaltet ausgebildet ist. Der Rollstützbereich 13 der in Fig. 3.1 dargestellten Tragrolle 10 ist identisch ausgebildet zu dem Rollstützbereich 13 der in Fig. 2 dargestellten Tragrolle 10. Anders als bei der in Fig. 2 gezeigten Konstruktion ist in Fig. 3.1 jedoch der Rollstützbereich 13 auf dem Walzenelement 12 nicht mittig angeordnet, sondern zum einen Ende hin verschoben. Damit ist die linke Seite des Walzenelements 12, welche den ersten Walzenbereich 16 und die erste Hälfte des zweiten Walzenbereichs 17 enthält, also von der rechten Seite des Walzenelements 12 verschieden, welche den dritten Walzenbereich 18 und die zweite Hälfte des zweiten Walzenbereichs 17 enthält.

Die in Fig. 3.1 dargestellte Tragrolle 10 kann zum Abstützen von gemuldeten oder gerollten Fördergurten eingesetzt werden, beispielsweise als seitliche Tragrolle in Tragrollenstationen für gemuldete oder gerollte Fördergurte, die den Fördergurt jeweils nach unten abstützt.

In Fig. 2 und Fig. 3.1 sind Tragrollen 10 wiedergegeben, welche jeweils einen in axialer Richtung symmetrischen Rollstützbereich 13 aufweisen. Insgesamt kann der Rollstützbereich 13 beliebig (rotationssymmetrisch) ausgebildet sein. Anders als die zuvor gezeigten Tragrollen weist die in Fig. 3.2 schematisch dargestellte Tragrolle 10 lediglich an einem einzigen Endabschnitt - ihrem rechten Endabschnitt - einen Bereich auf, welcher im Betrieb nicht mit dem Fördergurt abstützend in Kontakt tritt und dessen Durchmesser dem Maximaldurchmesser 14 des Rollstützbereichs 13 entspricht; demzufolge ist die in Fig. 3.2 dargestellte Ausgestaltung von der vorliegenden Erfindung nicht abgedeckt. Dieser Bereich geht in den Rollstützbereich 13 über, sodass der Rollstützbereich 13 nur an seinem rechten Rand den Maximaldurchmesser 14 aufweist, im endständigen ersten Walzenbereich 16 des Walzenelements 12. Damit besitzt das Walzenelement 12 den größten Durchmesser des Rollstützbereichs 13 also in seinem rechten Endabschnitt. In axialer Richtung betrachtet ist bei der in Fig. 3.2 dargestellten Tragrolle 10 der Rollstützbereich 13 asymmetrisch ausgebildet, wobei der Minimaldurchmesser 15 des Rollstützbereichs 13 im zweiten Walzenbereich 17 nahe dem linken Rand des Walzenelements 12 und damit in dessen Endabschnitt vorliegt. Folglich weist diese Tragrolle 10 lediglich einen ersten Walzenbereich 16 und einen zweiten Walzenbereich 17 auf, welche unmittelbar aneinander angrenzend angeordnet sind, jedoch keinen dritten Walzenbereich. Vom rechten Rand des Rollstützbereichs 13, wo der Rollstützbereich 13 den Maximaldurchmesser 14 aufweist, zu der Stelle hin, wo der Rollstützbereich 13 den Minimaldurchmesser 15 aufweist, nimmt der Durchmesser des Rollstützbereichs 13 kontinuierlich ab, sodass der Durchmesser also monoton fällt.

Die konkrete Ausgestaltung des (rotationssymmetrischen) Rollstützbereichs 13 wie auch der Bereiche des Walzenelements 12, welche im Betrieb nicht mit dem Fördergurt in Kontakt treten, richtet sich dabei jeweils nach den jeweiligen Anforderungen. Abweichend von den in Fig. 2, Fig. 3.1 dargestellten Tragrollen 10 kann beispielsweise der Durchmesser des Rollstützbereichs 13 über Abschnitte des Rollstützbereichs 13 auch konstant sein, es können der Minimaldurchmesser 15 des Rollstützbereichs 13 wie auch der Maximaldurchmesser 14 des Rollstützbereichs 13 an mehr als einer Stelle vorliegen, wodurch sich als Kontur des Walzenelements 12 in axialer Richtung auch ein mehrfach geschwungenes Profil ergeben kann.

Die in Fig. 2 und Fig. 3.1 dargestellten Tragrollen 10 können an der Mantelfläche des Walzenelements 12 optional jeweils eine Beschichtung aufweisen, die die Reibung vermindert, gegebenenfalls auch mehrere Beschichtungen. Typischerweise handelt es sich hierbei um eine Lackierung oder eine Polymerschicht, welche an der gesamten Mantelfläche des Walzenelements 12 aufgebracht wird oder nur auf einen Teilbereich derselben, etwa dem Rollstützbereich 13 oder auch nur auf einen Teil des Rollstützbereichs 13, beispielsweise auf den Randbereich des Rollstützbereichs 13. Abweichend von der Darstellung in den Fig. 2 und Fig. 3.1 können die dort gezeigten Bereiche, welche gemäß Fig. 2 und Fig. 3.1 im Betrieb nicht mit dem Fördergurt abstützend in Kontakt treten, stattdessen auch als Bereiche ausgebildet sein, welche im Betrieb mit dem Fördergurt abstützend in Kontakt treten. Damit würden diese Bereiche dann also endständige Teilbereiche des Rollstützbereichs 13 darstellen, deren Durchmesser entlang der axialen Erstreckung konstant ist und dem Maximaldurchmesser 14 des Rollstützbereichs 13 entspricht.

Die hier in den Fig. 2, Fig. 3.1 und Fig. 3.2 dargestellten Tragrollen 10 weisen jeweils einstückige Walzenelemente 12 auf, sodass das Walzenelement 12 jeweils nur aus einem einzigen Rohrabschnitt ausgebildet (Segment) ist, dem Walzenring. In die Enden dieses Walzenrings sind die Tragrollenböden eingepasst. Die Mantelfläche dieses Walzenrings bildet dabei den Rollstützbereich des Walzenelements, welcher im Betrieb in Kontakt mit der Unterseite des Fördergurtes tritt und diesen dadurch abstützt. Alternativ können auch andere Ausbildungen des Walzenelements zum Einsatz gelangen. So kann dieses beispielsweise auch aus mehreren - mindestens zwei - Rohrabschnitten (Segmente) bestehen, welche jeweils endseitig durch Kappen mit darin eingepassten Lagerelementen abgeschlossen werden. Diese Rohrabschnitte sind dann auf einer gemeinsamen Rotationsachse direkt nebeneinander angeordnet und können um diese jeweils frei und unabhängig voneinander Drehbewegungen ausführen. Die Vielzahl an Rohrabschnitten bilden dann zusammen das Walzenelement, sodass der Rollstützbereich sich aus den Mantelbereichen mehrerer Rohrabschnitte zusammensetzt, die durch schmale Spalte voneinander getrennt sind, in denen der Fördergurt im Betrieb jeweils nicht abgestützt wird und die somit nicht zum Rollstützbereich 13 gehören. (Innerhalb dieser Spaltbereiche ist der Durchmesser des Walzenelements gleich dem Rotationsachsendurchmesser; da diese Abschnitte jedoch nicht zum Rollstützbereich 13 gehören, stellt der Rotationsachsendurchmesser dort nicht den Minimaldurchmesser 15 des Rollstützbereichs 13 dar.) Bei dieser Ausgestaltung als segmentierte Tragrolle sind also die Summe der Mantelbereiche aller Rohrabschnitte als Mantelbereich des Walzenelements insgesamt vorgesehen, sodass es sein kann, dass der Maximaldurchmesser des Rollstützbereichs und der Minimaldurchmesser des Rollstützbereichs nicht auf demselben Rohrabschnitt gelegen sind, sondern auf unterschiedlichen Rohrabschnitten.

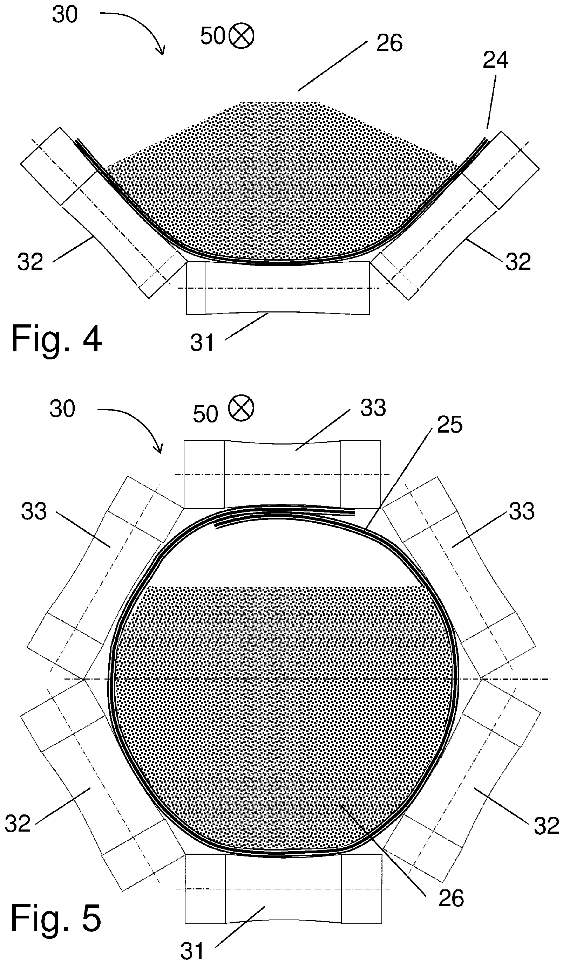

Fig. 4 zeigt schematisch einen Querschnitt eines gemuldeten Fördergurtes 24 an einer Tragrollenstation 30, welcher an seiner Oberseite eine obere Deckplatte, innenliegend einen Längsträger sowie an seiner Unterseite eine untere Deckplatte aufweist (in Fig. 4 jeweils angedeutet). Der gemuldete Fördergurt 24 liegt mit einer U-förmigen Muldung vor, in welche Fördergut 26 eingebracht ist. In dieser Darstellung ist das Fördergut 26 Schüttgut, also ein körniges oder stückiges Gemenge, das in schüttfähiger Form vorliegt; stattdessen können natürlich auch alle anderen geeigneten Arten an Gütern gefördert werden, beispielsweise kleinteiliges Stückgut und dergleichen. Die Tragrollenstation 30 weist drei Tragrollen 31, 32 auf, nämlich zuunterst eine Tragrolle 31 mit einem symmetrischen Walzenelement und zur seitlichen Abstützung links und rechts jeweils eine Tragrolle 32 mit je einem asymmetrischen Walzenelement. Mittels dieser drei Tragrollen wird die Muldung ausgebildet und über die Abfolge an Tragrollenstationen über die Transportstrecke aufrechterhalten.

Die unten angeordnete Tragrolle 31 mit dem symmetrischen Walzenelement weist an ihrem rechten und linken Endabschnitt Bereiche auf, welche nicht in Kontakt mit dem gemuldeten Fördergurt 24 treten. Der gemuldete Fördergurt 24 wird dort lediglich von dem Rollstützbereich im Mittenabschnitt der Tragrolle 31 gestützt, dessen Durchmesser sich zu der Mitte der Tragrolle hin verjüngt.

Bei den beiden Tragrollen 32 mit je einem asymmetrischen Walzenelement befindet sich die Stelle, an welcher der Rollstützbereich den Minimaldurchmesser aufweist, in axialer Richtung nicht in der Mitte des Walzenelements, sodass es sich hierbei um asymmetrisch ausgebildete Walzenelemente handelt. Die Achsen dieser beiden Tragrollen 32 sind dabei schräg gestellt in Bezug auf die Achse der unteren Tragrolle 31 mit dem symmetrischen Walzenelement. Infolge dieser Schrägstellung ergibt sich die U-Form und damit die Muldung des gemuldeten Fördergurtes 24. Die schräg gestellten Tragrollen 32 weisen an ihren unteren Endabschnitten jeweils einen Bereich auf, der nicht in Kontakt mit der Unterseite des gemuldeten Fördergurtes 24 tritt und dessen Durchmesser dem Maximaldurchmesser des Rollstützbereichs entspricht. An ihren oberen Endabschnitten weisen die schräg gestellten Tragrollen 32 ebenfalls einen Bereich auf, dessen Durchmesser sich in axialer Richtung nicht ändert und dem Maximaldurchmesser des Rollstützbereichs entspricht. Dieser Bereich steht jedoch im Kontakt mit der Unterseite des gemuldeten Fördergurtes 24, sodass die beiden endständigen oberen Bereiche somit zum Rollstützbereich gehören, an welchen der obere - zum Teil leere - Randbereich des gemuldeten Fördergurtes 24 anliegt. Somit weisen die schräg gestellten Tragrollen 32 also an beiden endständigen Walzenabschnitten Durchmesser auf, die dem Maximaldurchmesser des Rollstützbereichs entsprechen, wobei jedoch lediglich der am oberen Ende gelegene Bereich einen Teil des Rollstützbereichs bildet.

Wie in Fig. 4 gezeigt, können die drei Tragrollen 31, 32 in einer Ebene quer zur Bewegungsrichtung 50 des Fördergurtes angeordnet sein. Stattdessen können die drei Tragrollen aber auch gegeneinander versetzt angeordnet sein, beispielsweise in zwei zueinander parallelen Ebenen, die quer zur Bewegungsrichtung 50 des Fördergurtes ausgerichtet sind, wobei die untere Tragrolle 31 in einer Ebene und die beiden schräg gestellten Tragrollen 32 in der zweiten Ebene liegen; in dieser Anordnung ist es möglich, dass die Rollstützbereiche der Tragrollen unterhalb des Fördergurtes in Richtung quer zur Förderrichtung überlappen, um so eine besonders stabile und effektive Abstützung zu gewährleisten.

Fig. 5 zeigt schematisch einen Querschnitt eines gerollten Fördergurtes 25 an einer Tragrollenstation 30, welcher an seiner Oberseite eine obere Deckplatte, innenliegend einen Längsträger sowie an seiner Unterseite eine untere Deckplatte aufweist (in Fig. 5 jeweils angedeutet). Der gerollte Fördergurt 25 bildet hier einen Schlauch, in dem die Seiten des gerollten Fördergurtes 25 zu einer O-Form nach oben gebogen sind und die Endabschnitte oben jeweils überlappen und dadurch einen röhrenartigen Rohrraum bilden, in welchem sich das Fördergut 26 befindet. Die Tragrollenstation 30 weist sechs Tragrollen auf, nämlich zuunterst eine Tragrolle 31 mit einem symmetrischen Walzenelement, zur unteren seitlichen Abstützung links und rechts jeweils eine Tragrolle 32 mit je einem asymmetrischen Walzenelement, darüber zur oberen seitlichen Abstützung links und rechts jeweils eine Tragrolle 33 mit je einem symmetrischen Walzenelement mit schmalem Rollstützbereich (welcher schmaler ist als der Rollstützbereich der unten angeordneten Tragrolle 31 mit symmetrischem Walzenelement) und schließlich oben quer eine weitere Tragrolle 33 mit einem symmetrischen Walzenelement mit schmalem Rollstützbereich.

Dabei sind die untere Tragrolle 31 mit dem symmetrischen Walzenelement und die obere Tragrolle 33 mit dem symmetrischen Walzenelement mit schmalem Rollstützbereich einander gegenüberliegend horizontal ausgerichtet, sodass die Rotationsachsen dieser Elemente senkrecht zur Förderrichtung horizontal verlaufen. In Bezug auf diese horizontal ausgerichteten Tragrollen 31, 33 sind die beiden Tragrollen 32 zur unteren seitlichen Abstützung sowie die beiden Tragrollen 33 zur oberen seitlichen Abstützung jeweils schräg gestellt, wodurch die Tunnelform des gerollten Fördergurtes 25 vorgegeben wird. Dabei ist jeweils eine zur unteren seitlichen Abstützung vorgesehene Tragrolle 32 einer oberen seitlichen Abstützung vorgesehene Tragrollen 33 gegenüberliegend, sodass deren Rotationsachsen jeweils parallel zueinander verlaufen.

Alle Tragrollen 31, 32, 33 weisen an ihren rechten und linken Endabschnitten jeweils Bereiche auf, welche nicht in Kontakt mit dem gerollten Fördergurt 25 treten. Der gerollte Fördergurt 25 wird in der in Fig. 5 dargestellten Tragrollenstation 30 also von den Rollstützbereichen in den jeweiligen Mittenabschnitten der einzelnen Tragrollen gestützt, wobei sich der Durchmesser jedes Rollstützbereichs jeweils zu seiner Mitte hin verjüngt. Bei den beiden zur unteren seitlichen Abstützung vorgesehene Tragrollen 32 mit je einem asymmetrischen Walzenelement befindet sich die Stelle, an welcher der Rollstützbereich den Minimaldurchmesser aufweist, in axialer Richtung nicht in der Mitte des Walzenelements, sodass es sich hierbei trotz des symmetrischen Rollstützbereichs insgesamt um asymmetrisch ausgebildete Walzenelemente handelt. Bei den beiden zur oberen seitlichen Abstützung vorgesehenen Tragrollen 33 wie auch bei der oben querliegenden Tragrolle 33 befindet sich die Stelle, an welcher der Rollstützbereich den Minimaldurchmesser aufweist, in axialer Richtung in der Mitte des Walzenelements, sodass es sich hierbei um symmetrisch ausgebildete Walzenelemente handelt, welche jeweils engere (schmalere) Rollstützbereiche als die untere Tragrolle 31 aufweisen. Alle Tragrollen 31, 32, 33 weisen hier also an beiden endständigen Walzenabschnitten Durchmesser auf, die dem Maximaldurchmesser des Rollstützbereichs entsprechen, welche jedoch nicht im Kontakt mit dem Fördergurt 25 stehen.

Die breiteren Rollstützbereiche sind für die Tragrollen 31, 32 in der unteren Hälfte des gerollten Fördergurtes 25 vorgesehen, da infolge der nach unten wirkenden Gewichtskraft die Rundung des gerollten Fördergurtes 25 abgeflacht wird, wodurch sich der Kontaktbereich zwischen dem gerollten Fördergurt 25 und den Tragrollen 31, 32 verbreitert - und damit auch der Rollstützbereich. In der oberen Hälfte des gerollten Fördergurtes 25 sind hingegen Tragrollen 33 mit schmaleren Rollstützbereichen ausreichend, da der gerollte Fördergurt 25 dort keine besondere Abflachung erfährt.

Auch bei der in Fig. 5 dargestellten Konfiguration können die Rotationsachsen der Tragrollen 31, 32, 33 in einer einzigen Ebene quer zur Bewegungsrichtung 50 des Fördergurtes angeordnet sein oder aber in mehreren, zueinander parallelen Ebenen, das heißt gegeneinander versetzt.

In Fig. 4 und Fig. 5 sind der besseren Übersicht halber die weiteren Bestandteile der Tragrollenstation 30 nicht dargestellt, welche typischerweise in Tragrollenstationen vorgesehen sind, also etwa das Traggerüst selbst, die Lagerungen der Achsen der Tragrollen an dem Traggerüst (entweder starr, etwa als Tragrollenstuhl, oder relativ zueinander bewegbar, etwa als Tragrollengirlande), die Tragrollenwalzen der Fördergurtrückführung im Untertrum sowie weitere, optionale Elemente wie etwa seitliche Führungsrollen zum Begrenzen einer unerwünschten seitlichen Laufbewegung des Fördergurtes während des Betriebs, Drehlager zum Verdrehen der Tragrollenstation innerhalb der Förderebene, Schurren und dergleichen.

### Bezuqszeichenliste:

- 10: Tragrolle
- 11: Rotationsachse
- 12: Walzenelement
- 13: Rollstützbereich
- 14: Maximaldurchmesser des Rollstützbereichs
- 15: Minimaldurchmesser des Rollstützbereichs
- 16: erster Walzenbereich
- 17: zweiter Walzenbereich
- 18: dritter Walzenbereich
- 20: Fördergurt
- 21: Längsträger
- 22: obere Deckplatte
- 23: untere Deckplatte
- 24: gemuldeter Fördergurt
- 25: gerollter Fördergurt
- 26: Fördergut
- 30: Tragrollenstation
- 31: Tragrolle mit symmetrischen Walzenelement
- 32: Tragrolle mit asymmetrischen Walzenelement
- 33: Tragrolle mit symmetrischen Walzenelement mit schmalem Rollstützbereich
- 50: Bewegungsrichtung des Fördergurtes
- 51: Rotationsrichtung der Tragrolle
- 52: Radius des Rollstützbereichs des Walzenelements der Tragrolle
- 53: lokaler Krümmungsradius der Längskrümmung des Zugträgers
- 54: Abstand der Oberfläche der unteren Deckplatte von der Mitte des Längsträgers
- 60: axiale Ausdehnung des Rollstützbereichs
- 61: Spiegelebene

## Patentansprüche

1. Tragrolle (10, 31, 32, 33) für einen gemuldeten Fördergurt (24) oder einen gerollten Fördergurt (25), wobei die Tragrolle (10, 31, 32, 33) um eine Rotationsachse (11) rotierbar ausgebildet ist und ein Walzenelement (12) mit einem Rollstutzbereich (13) umfasst, welcher eingerichtet ist, den Fördergurt (24, 25) rollend abzustützen,
wobei der Rollstützbereich (13) bezüglich der Rotationsachse (11) der Tragrolle (10, 31, 32, 33) rotationssymmetrisch ist und entlang seiner axialen Ausdehnung unterschiedliche Durchmesser mit einem Maximaldurchmesser (14) des Rollstützbereichs (13) und einem Minimaldurchmesser (15) des Rollstützbereichs (13) aufweist,
wobei das Walzenelement (12) einen ersten Walzenbereich (16) und einen zweiten Walzenbereich (17) umfasst und einen dritten Walzenbereich (18) aufweist, von denen der erste Walzenbereich (16) an einem Ende des Walzenelements (12) angeordnet ist und von denen der zweite Walzenbereich (17) neben dem ersten Walzenbereich (16) angeordnet ist und von denen der dritte Walzenbereich (18) an einem weiteren Ende des Walzenelements (12) angeordnet ist, wobei das weitere Ende dem Ende des Walzenelements (12) mit dem ersten Walzenbereich (16) gegenüber angeordnet ist, sodass der zweite Walzenbereich (17) in axialer Richtung zwischen dem ersten Walzenbereich (16) und dem dritten Walzenbereich (18) angeordnet ist,
wobei der Rollstützbereich (13) zumindest in einem Teil des ersten Walzenbereichs den Maximaldurchmesser (14) aufweist, und
wobei der Rollstützbereich (13) zumindest in einem Teil des zweiten Walzenbereichs den Minimaldurchmesser (15) aufweist, und
wobei der Rollstützbereich (13) zumindest in einem Teil des dritten Walzenbereichs den Maximaldurchmesser (14) aufweist
***dadurch gekennzeichnet, dass***
der Minimaldurchmesser (15) des Rollstützbereichs (13) mindestens 95 % und höchstens 99,8 % des Maximaldurchmessers (14) des Rollstützbereichs (13) beträgt.

2. Tragrolle (10, 31, 33) nach Anspruch 1, wobei das Walzenelement (12) in axialer Richtung symmetrisch ausgebildet ist, sodass eine erste Hälfte des Walzenelements (12), in welcher der erste Walzenbereich (16) angeordnet ist, spiegelsymmetrisch zu einer zweiten Hälfte des Walzenelements (12) ist, in welcher der dritte Walzenbereich (18) angeordnet ist, wobei die Spiegelebene (61) den zweiten Walzenbereich (17) mittig und rechtwinklig zur Rotationsachse (11) unterteilt.

3. Tragrolle (10, 32) nach einem der Ansprüche 1 oder 2, wobei das Walzenelement (12) in axialer Richtung asymmetrisch ausgebildet ist.

4. Tragrolle (10, 31, 32, 33) nach einem der Ansprüche 1 bis 3, wobei der Durchmesser des Rollstutzbereichs (13) von einer ersten Stelle, an welcher der Rollstützbereich (13) den Maximaldurchmesser (14) aufweist, bis zu einer zweiten Stelle, an welcher der Rollstutzbereich (13) den Minimaldurchmesser (15) aufweist, monoton fällt.

5. Tragrolle (10, 31, 32, 33) nach einem der Ansprüche 1 bis 4, wobei der Minimaldurchmesser (15) des Rollstützbereichs (13) mindestens 98,0 % des Maximaldurchmessers (14) des Rollstützbereichs (13) beträgt, insbesondere mindestens 99,0 % des Maximaldurchmessers (14) des Rollstutzbereichs (13).

6. Tragrolle (10, 31, 32, 33) nach einem der Ansprüche 1 bis 5, wobei der Minimaldurchmesser (15) des Rollstützbereichs (13) höchstens 99,75 % des Maximaldurchmessers (14) des Rollstützbereichs (13) beträgt, insbesondere höchstens 99,5 % des Maximaldurchmessers (14) des Rollstützbereichs (13).

7. Tragrolle (10, 31, 32, 33) nach einem der Ansprüche 1 bis 6, wobei die Tragrolle (10, 31, 32, 33) einen einzigen Walzenring aufweist, dessen Mantelfläche den Rollstützbereich (13) des Walzenelements (12) bildet.

8. Tragrolle nach einem der Ansprüche 1 bis 6, wobei die Tragrolle als segmentierte Tragrolle ausgebildet ist, welche mindestens zwei Walzenringe aufweist.

9. Tragrolle (10, 31, 32, 33) nach einem der Ansprüche 1 bis 8, wobei der Rollstützbereich (13) zumindest teilweise eine reibungsvermindernde Beschichtung aufweist, insbesondere eine Beschichtung mit einem Polymer oder eine Lackierung.

10. Tragrollenstation (30) mit mindestens einer Tragrolle (10, 31, 32, 33) nach einem der Ansprüche 1 bis 9, wobei die Tragrollenstation (30) als Tragrollenstuhl oder als Tragrollengirlande ausgebildet ist.

11. Tragrollenstation (30) nach Anspruch 10, wobei die Tragrollenstation (30) mindestens drei Tragrollen (10, 31, 32, 33) aufweist, die derart angeordnet sind, dass die Rotationsachsen (11) der mindestens drei Tragrollen (10, 31, 32, 33) in einer vertikalen Ebene oder in mehreren zueinander parallelen vertikalen Ebenen liegen,
wobei die mindestens drei Tragrollen (10, 31, 32, 33) eine erste Tragrolle (31),
eine zweite Tragrolle (32) und eine dritte Tragrolle (32) umfassen,
wobei die erste Tragrolle (31) in der Tragrollenstation (30) so angeordnet ist, dass die Rotationsachse (11) zumindest im Wesentlichen horizontal ausgerichtet ist,
wobei die Rotationsachse (11) der zweiten Tragrolle (32) und die Rotationsachse (11) der dritten Tragrolle (32) jeweils schräg zu der Rotationsachse (11) der ersten Tragrolle (31) angeordnet ist, und
wobei die erste Tragrolle (31) eine symmetrische Tragrolle nach Anspruch 2 oder nach den auf Anspruch 2 rückbezogenen Ansprüchen 4 bis 9 ist.

12. Tragrollenstation nach Anspruch 11, wobei die zweite Tragrolle und die dritte Tragrolle jeweils eine symmetrische Tragrolle nach Anspruch 2 oder nach den auf Anspruch 2 rückbezogenen Ansprüchen 4 bis 9 ist.

13. Tragrollenstation (30) nach Anspruch 11, wobei die zweite Tragrolle (32) und die dritte Tragrolle (32) jeweils asymmetrische Tragrollen (32) nach Anspruch 3 oder nach den auf Anspruch 3 rückbezogenen Ansprüchen 4 bis 9 sind,
wobei bei der zweiten Tragrolle (32) und der dritten Tragrolle (32) jeweils der zweite Walzenbereich (17) in derjenigen Hälfte des jeweiligen Walzenelements (12) liegt, welche neben der ersten Tragrolle (31) angeordnet ist.

14. Gurtförderanlage mit mindestens einer Tragrollenstation (30) nach einem der Ansprüche 10 bis 13 sowie mit einem gemuldeten Fördergurt (24) und/oder einem gerollten Fördergurt (25).

15. Verfahren zum Abstützen und Führen eines gemuldeten oder gerollten bewegten Fördergurtes (24, 25), der quer zur Bewegungsrichtung (50) eine Querkrümmung aufweist,
***dadurch gekennzeichnet, dass***
der Fördergurt (24, 25) im Bereich der Querkrümmung an zumindest einer Tragrolle (10, 31, 32, 33) nach einem der Ansprüche 1 bis 9 entlang geführt und durch den Rollstützbereich (13) abgestützt wird, insbesondere wenn der Krümmungsradius der Querkrümmung des Fördergurtes (24, 25) höchstens 5 m beträgt oder höchstens 2 m oder sogar höchstens 1 m.

16. Verfahren nach Anspruch 15, wobei als die zumindest eine Tragrolle (10, 31, 32, 33) eine Tragrolle (10, 31, 32, 33) mit einem Walzenelement (12) mit einem Rollstützbereich (13) verwendet wird, dessen entlang der axialen Ausdehnung unterschiedliche Durchmesser jeweils mit der Querkrümmung des Fördergurtes (24, 25) korrespondieren.

## Claims

1. Carrier roller (10, 31, 32, 33) for a trough-like conveyor belt (24) or a rolled conveyor belt (25), wherein the carrier roller (10, 31, 32, 33) is configured to be rotatable about an axis of rotation (11) and comprises a roller element (12) including a roller support region (13) which is configured to support the conveyor belt (24, 25) in a rolling manner,
wherein the roller support region (13) is rotationally symmetrical with respect to the axis of rotation (11) of the carrier roller (10, 31, 32, 33) and has different diameters along its axial extension with a maximum diameter (14) of the roller support region (13) and a minimum diameter (15) of the roller support region (13).
wherein the roller element (12) comprises a first roller region (16), a second roller region (17) and a third roller region (18), wherein the first roller region (16) is arranged at one end of the roller element (12), the second roller region (17) is arranged adjacent to the first roller region (16) and the third roller region (18) is arranged at a further end of the roller element (12), wherein the further end is arranged opposite the end of the roller element (12) comprising the first roller region (16), so that the second roller region (17) is arranged in the axial direction between the first roller region (16) and the third roller region (18),
wherein the roller support region (13) has the maximum diameter (14) at least in a part of the first roller region, and
wherein the roller support region (13) has the minimum diameter (15) at least in a part of the second roller region, and
wherein the roller support region (13) has the maximum diameter (14) at least in a part of the third roller region,
**characterized in that**
the minimum diameter (15) of the roller support region (13) is at least 95% and at most 99.8% of the maximum diameter (14) of the roller support region (13).

2. Carrier roller (10, 31, 33) according to claim 1, wherein the roller element (12) is configured symmetrically in the axial direction, so that a first half of the roller element (12), in which the first roller region (16) is arranged, is mirror-symmetrical to a second half of the roller element (12), in which the third roller region (18) is arranged, wherein the mirror plane (61) divides the second roller region (17) centrally and at right angles to the axis of rotation (11).

3. Carrier roller (10, 32) according to claim 1 or 2, wherein the roller element (12) is configured asymmetrical in the axial direction.

4. Carrier roller (10, 31, 32, 33) according to any one of claims 1 to 3, wherein the diameter of the roller support region (13) decreases monotonically from a first position, at which the roller support region (13) has the maximum diameter (14), to a second position, at which the roller support region (13) has the minimum diameter (15).

5. Carrier roller (10, 31, 32, 33) according to any one of claims 1 to 4, wherein the minimum diameter (15) of the roller support region (13) is at least 98.0% of the maximum diameter (14) of the roller support region (13), in particular at least 99.0% of the maximum diameter (14) of the roller support region (13).

6. Carrier roller (10, 31, 32, 33) according to any one of claims 1 to 5, wherein the minimum diameter (15) of the roller support region (13) is at most 99.75% of the maximum diameter (14) of the roller support region (13), in particular at most 99.5% of the maximum diameter (14) of the roller support region (13).

7. Carrier roller (10, 31, 32, 33) according to any one of claims 1 to 6, wherein the carrier roller (10, 31, 32, 33) comprises a single roller ring, the circumferential surface of which forms the roller support region (13) of the roller element (12).

8. Carrier roller according to any one of claims 1 to 6, wherein the carrier roller is configured as a segmented carrier roller comprising at least two roller rings.

9. Carrier roller (10, 31, 32, 33) according to any one of claims 1 to 8, wherein the roller support region (13) comprises at least partially a friction-reducing coating, in particular a coating comprising a polymer or a lacquer.

10. Carrier roller station (30) comprising at least one carrier roller (10, 31, 32, 33) according to any one of claims 1 to 9, wherein the carrier roller station (30) is configured as a carrier roller bracket or as a carrier roller garland.

11. Carrier roller station (30) according to claim 10, wherein the carrier roller station (30) comprises at least three carrier rollers (10, 31, 32, 33) which are arranged in such a way that the axes of rotation (11) of the at least three carrier rollers (10, 31, 32, 33) lie in a vertical plane or in a plurality of vertical planes parallel to one another,
wherein the at least three carrier rollers (10, 31, 32, 33) comprise a first carrier roller (31), a second carrier roller (32) and a third carrier roller (32),
wherein the first carrier roller (31) is arranged in the carrier roller station (30) in such a way that the axis of rotation (11) is aligned at least substantially horizontally,
wherein the axis of rotation (11) of the second carrier roller (32) and the axis of rotation (11) of the third carrier roller (32) are each arranged at an angle to the axis of rotation (11) of the first carrier roller (31), and
wherein the first carrier roller (31) is a symmetrical carrier roller according to claim 2 or according to claims 4 to 9 referring back to claim 2.

12. Carrier roller station according to claim 11, wherein the second carrier roller and the third carrier roller are each a symmetrical carrier roller according to claim 2 or according to claims 4 to 9 referring back to claim 2.

13. Carrier roller station (30) according to claim 11, wherein the second carrier roller (32) and the third carrier roller (32) are each asymmetrical carrier rollers (32) according to claim 3 or according to claims 4 to 9 referring back to claim 3,
wherein in the second carrier roller (32) and the third carrier roller (32) the second roller region (17) is located in that half of the respective roller element (12) which is arranged adjacent to the first carrier roller (31).

14. Belt conveyor system comprising at least one carrier roller station (30) according to any one of claims 10 to 13 and a trough-like conveyor belt (24) and/or a rolled conveyor belt (25).

15. Method for supporting and guiding a trough-like or rolled moving conveyor belt (24, 25) which has a transverse curvature transverse to the direction of movement (50),
**characterized in that**
the conveyor belt (24, 25) is guided in the region of the transverse curvature at at least one carrier roller (10, 31, 32, 33) according to any one of claims 1 to 9 and is supported by the roller support region (13), in particular if the radius of curvature of the transverse curvature of the conveyor belt (24, 25) is at most 5 m or at most 2 m or even at most 1 m.

16. Method according to claim 15, wherein as the at least one carrier roller (10, 31, 32, 33) a carrier roller (10, 31, 32, 33) comprising a roller element (12) including a roller support region (13) is used, the diameters of which, which differ along the axial extension, respectively correspond to the transverse curvature of the conveyor belt.

## Revendications

1. Rouleau de support (10, 31, 32, 33) pour une bande transporteuse en forme d'auge (24) ou d'une bande transporteuse enroulée (25), le rouleau de support (10, 31, 32, 33) étant conçu rotatif autour d'un axe de rotation (11) et comprenant un élément cylindrique (12) pourvu d'une région de support de rouleau (13), laquelle est conçue pour supporter en rotation la bande transporteuse (24, 25),
dans lequel la région de support de rouleau (13) est symétrique par rotation par rapport à l'axe de rotation (11) du rouleau de support (10, 31, 32, 33) et présente le long de son extension axiale des diamètres variables, avec un diamètre maximal (14) de la région de support de rouleau (13) et un diamètre minimal (15) de la région de support de rouleau (13),
dans lequel l'élément cylindrique (12) comprend une première région cylindrique (16) et une deuxième région cylindrique (17), et présente une troisième région cylindrique (18), parmi lesquelles la première région cylindrique (16) est disposée à une extrémité de l'élément cylindrique (12) et parmi lesquelles la deuxième région cylindrique (17) est disposée à côté de la première région cylindrique (16) et parmi lesquelles la troisième région cylindrique (18) est disposée à une autre extrémité de l'élément cylindrique (12), où l'autre extrémité est disposée en face de l'extrémité de l'élément cylindrique (12) avec la première région cylindrique (16) de sorte que la deuxième région cylindrique (17) est disposée en direction axiale entre la première région cylindrique (16) et la troisième région cylindrique (18),
dans lequel la région de support de rouleau (13) présente le diamètre maximal (14) au moins dans une partie de la première région cylindrique, et
dans lequel la région de support de rouleau (13) présente le diamètre minimal (15) au moins dans une partie de la deuxième région cylindrique, et
dans lequel la région de support de rouleau (13) présente le diamètre maximal (14) au moins dans une partie de la troisième région cylindrique
***caractérisé en ce que***
le diamètre minimal (15) de la région de support de rouleau (13) est égal à au moins 95 % et au plus à 99,8 % du diamètre maximal (14) de la région de support de rouleau (13).

2. Rouleau de support (10, 31, 33) selon la revendication 1, dans lequel l'élément cylindrique (12) est conçu symétrique dans la direction axiale de sorte qu'une première moitié de l'élément cylindrique (12), dans laquelle est disposé la première région cylindrique (16), est symétrique en miroir par rapport à une deuxième moitié de l'élément cylindrique (12), dans laquelle est disposée la troisième région cylindrique (18), où le plan de symétrie (61) subdivise la deuxième région cylindrique (17) au milieu et avec un angle droit par rapport à l'axe de rotation (11).

3. Rouleau de support (10, 32) selon la revendication 1 ou la revendication 2, dans lequel l'élément cylindrique (12) est conçu asymétrique dans la direction axiale.

4. Rouleau de support (10, 31, 32, 33) selon l'une des revendications 1 à 3, dans lequel le diamètre de la région de support de rouleau (13) diminue de façon monotone à partir d'un premier point, où la région de support de rouleau (13) présente le diamètre maximal (14), jusqu'à un deuxième point où la région de support de rouleau (13) présente le diamètre minimal (15).

5. Rouleau de support (10, 31, 32, 33) selon l'une des revendications 1 à 4, dans lequel le diamètre minimal (15) de la région de support de rouleau (13) est égal à au moins 98,0 % du diamètre maximal (14) de la région de support de rouleau (13), en particulier, au moins à 99,0 % du diamètre maximal (14) de la région de support de rouleau (13).

6. Rouleau de support (10, 31, 32, 33) selon l'une des revendications 1 à 5, dans lequel le diamètre minimal (15) de la région de support de rouleau (13) est égal au plus à 99,75 % du diamètre maximal (14) de la région de support de rouleau (13), en particulier, au plus à 99,5 % du diamètre maximal (14) de la région de support de rouleau (13).

7. Rouleau de support (10, 31, 32, 33) selon l'une des revendications 1 à 6, le rouleau de support (10, 31, 32, 33) présentant un seul anneau cylindrique dont la surface d'enveloppe forme la région de support de rouleau (13) de l'élément cylindrique (12).

8. Rouleau de support selon l'une des revendications 1 à 6, le rouleau de support étant conçu sous forme de rouleau de support segmenté, lequel présente au moins deux anneaux cylindriques.

9. Rouleau de support (10, 31, 32, 33) selon l'une des revendications 1 à 8, dans lequel la région de support de rouleau (13) présente au moins partiellement un revêtement réduisant la friction, notamment un revêtement avec un polymère ou une laque.

10. Poste de rouleaux de support (30) avec au moins un rouleau de support (10, 31, 32, 33) selon l'une des revendications 1 à 9, le poste de rouleaux de support (30) étant conçu comme une chaise à rouleaux de support ou une guirlande à rouleaux de support.

11. Poste de rouleaux de support (30) selon la revendication 10, le poste de rouleaux de support (30) présentant au moins trois rouleaux de support (10, 31, 32, 33) qui sont disposés de telle manière que les axes de rotation (11) des au moins trois rouleaux de support (10, 31, 32, 33) se situent dans un plan vertical ou plusieurs plans verticaux parallèles les uns aux autres,
dans lequel les au moins trois rouleaux de support (10, 31, 32, 33) comprennent un premier rouleau de support (31), un deuxième rouleau de support (32) et un troisième rouleau de support 32),
dans lequel le premier rouleau de support (31) est disposé dans le poste de rouleaux de support (30) de telle manière que l'axe de rotation (11) est orienté au moins essentiellement de manière horizontale,
dans lequel l'axe de rotation (11) du deuxième rouleau de support (32) et l'axe de rotation (11) du troisième rouleau de support (32) sont respectivement disposés inclinés par rapport à l'axe de rotation (11) du premier rouleau de support (31), et
dans lequel le premier rouleau de support (31) est un rouleau de support symétrique selon la revendication 2 ou selon les revendications 4 à 9 relatives à la revendication 2.

12. Poste de rouleaux de support selon la revendication 11, dans lequel le deuxième rouleau de support et le troisième rouleau de support sont respectivement un rouleau de support symétrique selon la revendication 2 ou selon les revendications 4 à 9 relatives à la revendication 2.

13. Poste de rouleaux de support (30) selon la revendication 11, dans lequel le deuxième rouleau de support (32) et le troisième rouleau de support (32) sont respectivement un rouleau de support asymétrique selon la revendication 3 ou selon les revendications 4 à 9 relatives à la revendication 3,
dans lequel, auprès du deuxième rouleau de support (32) et du troisième rouleau de support (32), il y a respectivement la deuxième région cylindrique (17) de la moitié en question de l'élément cylindrique (12) donné, lequel est disposé à côté du premier rouleau de support (31).

14. Installation de bande transporteuse avec au moins un poste de rouleaux de support (30) selon l'une des revendications 10 à 13 ainsi qu'avec une bande transporteuse en forme d'auge (24) ou une bande transporteuse enroulée (25).

15. Procédé de support et de guidage d'une bande transporteuse en forme d'auge ou enroulée (24, 25) qui présente une courbure transversale perpendiculairement par rapport à la direction de déplacement (50),
***caractérisé en ce que***
la bande transporteuse (24, 25) est menée sur au moins un rouleau de support (10, 31, 32, 33) selon l'une des revendications 1 à 9 et est supportée par la région de support de rouleau (13) dans la région de la courbure transversale, notamment lorsque le rayon de courbure de la courbure transversale de la bande transporteuse (24, 25) est au plus de 5 m, ou au plus de 2 m, ou même au plus de 1 m.

16. Procédé selon la revendication 15, dans lequel, en tant qu'au moins un rouleau de support (10, 31, 32, 33), on emploie un rouleau de support (10, 31, 32, 33) avec un élément cylindrique (12) pourvu d'une région de support de rouleau (13) dont les diamètres variables le long de l'extension axiale correspondent respectivement avec la courbure transversale de la bande transporteuse (24, 25).
